(19) Europäisches Patentamt / European Patent Office / Office européen des brevets

(11) **EP 4 377 678 B1**

(12) **EUROPEAN PATENT SPECIFICATION**

(45) Date of publication and mention
of the grant of the patent:
**21.01.2026 Bulletin 2026/04**

(21) Application number: **21751537.8**

(22) Date of filing: **26.07.2021**

(51) International Patent Classification (IPC):
**G01N 21/64** *(2006.01)*   **G02B 21/16** *(2006.01)*
**G02B 21/36** *(2006.01)*   **G02B 27/58** *(2006.01)*

(52) Cooperative Patent Classification (CPC):
**G01N 21/6458; G02B 21/0064; G02B 21/0072;**
**G02B 21/0076; G02B 21/008; G02B 21/367;**
**G02B 27/58;** G01N 2201/067; G01N 2201/106

(86) International application number:
**PCT/EP2021/070852**

(87) International publication number:
**WO 2023/006176 (02.02.2023 Gazette 2023/05)**

(54) **LOCALIZING A SINGULARIZED FLUOROPHORE MOLECULE BY CONTINUOUSLY MOVING A FOCUSED LIGHT BEAM AROUND THE MOLECULE**

LOKALISIERUNG EINES VEREINZELTEN FLUOROPHOR-MOLEKÜLS DURCH KONTINUIERLICHES BEWEGEN EINES FOKUSSIERTEN LICHTSTRAHLS UM DAS MOLEKÜL HERUM

LOCALISATION D'UNE MOLÉCULE FLUOROPHORE INDIVIDUALISÉE PAR DÉPLACEMENT CONTINUE D'UN FAISCEAU DE LUMIÈRE FOCALISÉ AUTOUR DE LA MOLÉCULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.06.2024 Bulletin 2024/23**

(73) Proprietor: **Max-Planck-Gesellschaft zur Förderung der Wissenschaften e.V.**
**80539 München (DE)**

(72) Inventors:
• **LEUTENEGGER, Marcel**
  **6473 Silenen (CH)**
• **WEBER, Michael**
  **37077 Göttingen (DE)**
• **VON DER EMDE, Henrik**
  **37073 Göttingen (DE)**
• **HELL, Stefan W.**
  **37085 Göttingen (DE)**

(74) Representative: **REHBERG HÜPPE + PARTNER Patentanwälte PartG mbB**
**Robert-Gernhardt-Platz 1**
**37073 Göttingen (DE)**

(56) References cited:
**US-B2- 9 772 285**

• **WEBER MICHAEL ET AL: "MINSTED fluorescence localization and nanoscopy", NATURE PHOTONICS, NATURE PUBLISHING GROUP UK, LONDON, vol. 15, no. 5, 15 March 2021 (2021-03-15), pages 361 - 366, XP037441360, ISSN: 1749-4885, [retrieved on 20210315], DOI: 10.1038/S41566-021-00774-2**
• **LAU LANA ET AL: "STED super-resolution microscopy intissue and in mammalian cells", REPORTERS, MARKERS, DYES, NANOPARTICLES, AND MOLECULAR PROBES FOR BIOMEDICAL APPLICATIONS III, SPIE, 1000 20TH ST. BELLINGHAM WA 98225-6705 USA, vol. 7910, no. 1, 10 February 2011 (2011-02-10), pages 1 - 8, XP060007015, DOI: 10.1117/12.881221**

- **MOFFITT JEFFREY R ET AL: "Time-gating improves the spatial resolution of STED microscopy", OPTICS EXPRESS, vol. 19, no. 5, 17 February 2011 (2011-02-17), pages 4242 - 4254, XP055900906, Retrieved from the Internet <URL:https://www.uni-ulm.de/fileadmin/website_uni_ulm/nawi.inst.070/pdfs/publikationen/2011/tsted.pdf> [retrieved on 20220314]**
- **HANS BLOM ET AL: "Stimulated Emission Depletion Microscopy", CHEMICAL REVIEWS, vol. 117, no. 11, 14 June 2017 (2017-06-14), US, pages 7377 - 7427, XP055710257, ISSN: 0009-2665, DOI: 10.1021/acs.chemrev.6b00653**
- **YE MA ET AL: "Fight against background noise in stimulated emission depletion nanoscopy", PHYSICAL BIOLOGY, INSTITUTE OF PHYSICS PUBLISHING, BRISTOL, GB, vol. 16, no. 5, 5 July 2019 (2019-07-05), pages 51002, XP020342809, ISSN: 1478-3975, [retrieved on 20190705], DOI: 10.1088/1478-3975/AB255C**

- **SEZGIN ERDINC ET AL: "Measuring nanoscale diffusion dynamics in cellular membranes with super-resolution STED-FCS", NATURE PROTOCOLS, NATURE PUBLISHING GROUP, GB, vol. 14, no. 4, 6 March 2019 (2019-03-06), pages 1054 - 1083, XP036742116, ISSN: 1754-2189, [retrieved on 20190306], DOI: 10.1038/S41596-019-0127-9**

## Description

## TECHNICAL FIELD OF THE INVENTION

The present invention relates to a method of determining a molecule position of a singularized fluorophore molecule in an object. More particularly, the present invention relates to method comprising the features of the preamble of independent claim 1.

## PRIOR ART

US 10,900,901 B2 discloses a method of high spatial resolution determining a position of a singularized molecule, which is excitable with excitation light for emission of luminescence light, in n spatial dimensions in a sample. A preliminary local area including the singularized molecule is determined. The excitation light is directed onto the sample with an intensity distribution, which has a zero point and intensity increasing regions adjoining the zero point on both sides in each of the n spatial directions. At first, the zero point is arranged at preliminary positions on known sides of the preliminary local area. Then, present positions of the zero point are successively shifted into the preliminary local area in each of the n spatial dimensions depending on photons of the luminescence light which is quasi-simultaneously separately registered for the present positions of the zero point in that the zero point is repeatedly shifted between the present positions of the zero point. The position of each zero point is shifted as soon as m photons of the luminescence light have been registered at the present position of the zero point. m may be very small and down to 1. When successively shifting the position of the zero point, the maximum intensity of the excitation light may successfully be increased. With successfully shifting the positions of the zero point, their distances to the actual position of the molecule in the sample is reduced. By increasing the maximum intensity of the excitation light, the reduced distances are newly distributed over a higher bandwidth of different intensities of the luminescence light from the singularized molecule. At the beginning of determining the position of the singularized molecule, a larger area of the sample including the singularized molecule may be scanned with a Gaussian intensity distribution of the excitation light, i.e. with a simple focused beam of the excitation light, in each of the spatial dimensions along a circular or spiral track. The position of the singularized molecule is then estimated from the course of the intensity of the luminescence light over the track.

WO 2020/064108 A1 discloses a method of and an apparatus for forming and shifting a light intensity distribution in a focal area of an objective lens. A plurality of discrete portions of coherent input light are directed into a plurality of non-identical pupil areas of the pupil of the objective lens. The light intensity distribution in the focal area of the objective lens is formed such as to display a local intensity minimum enclosed by intensity maxima. At least two discrete portions of the plurality of portions of coherent input light are separately modulated with regard to at least one of their phases and their amplitudes by means separate electro optical modulators such as to move the local intensity minimum along a circle around the optical axis of the objective lens. Photons emitted by a single fluorophore molecule located in the focal area are detected. For each photon detected, an associated position of the local intensity minimum in the focal area is registered. An average position of the registered positions is calculated and taken as the position of the single fluorophore molecule in the focal area.

WEBER MICHAEL ET AL: "MINSTED fluorescence localization and nanoscopy", Nat. Phot., 2021, https://doi.org/10.1038/s41566-021-00774-2 disclose a stimulated-emission-depletion (STED) based fluorescence localization and super-resolution microscopy concept providing spatial precision and resolution down to the molecular scale, and comprising the features of the preambel of independent claim 1. The intensity minimum of a STED donut and hence the point of minimal STED, serves as a movable reference coordinate for fluorophore localization in a lateral plane. Co-aligned excitation and STED beams are circled at a 125 kHz revolution frequency around an estimated position of a fluorophore molecule at a radius. The estimated position and the radius are updated after each photon detection. The radius starts with half a diffraction-limited diameter of an effective point spread function (E-PSF) of a STED microscope used. The estimated position is shifted and the radius is reduced by a fraction of the radius after each photon detected. Further, the STED intensity is increased to reduce the diameter of the E-PSF. Therefore, despite the progressively higher maximum intensity and the steeper slope of the E-PSF, the fluorophore molecule constantly experiences moderate STED intensity. Zooming-in on the fluorophore, the precision increases at which the position of the fluorophore molecule is determined. Whereas MINSTED has a high precision potential, the precision actually achieved may be affected by thermal issues due to the high intensities of the STED light repeatedly directed to a very small local area. The pulsed excitation light reportedly has a wavelength of 635 nm, and the also pulsed STED light has a STED wavelength of 775 nm. With Atto 647 N fluorophore molecules having a fluorescence light emission peak with a maximum peak intensity at about 660 nm, the STED wavelength is at the far-red edge of the emission peak, where the remaining peak intensity is about 10 % of the maximum peak intensity.

SEZGIN ERDINC ET AL: "Measuring nanoscale diffusion dynamics in cellular membranes with super-resolution STED-FCS", NATURE PROTOCOLS, NATURE PUBLISHING GROUP, GB, vol. 14, no. 4, 6 March 2019, pages 1054-1083, disclose a method combining fluorescence correlation spectroscopy (FCS) with super-resolution stimulated emission depletion (STED) microscopy. After having achieved a perfect spatial overlap of the STED and excitation beams by imaging immobilized fluorescent beads, the temporal synchronization of their pulsing is optimized, either through imaging using the same beads or with FCS of a freely diffusing dye. At the optimal delay setting with the most efficient depletion of the signal from the periphery of the confocal observation volume, the detected count rates of the fluorescent molecules will be the lowest, the auto correlation function (ACF) amplitude will be the highest and the transit time will be the shortest. This ensures the best possible spatial resolution.

## OBJECT OF THE INVENTION

It is the object of the present invention to provide a method of for determining a molecule position of a singularized fluorophore molecule in an object at both a higher precision and a minimum of photons emitted by the fluorophore molecule such that the photo-chemical stress to the fluorophore molecule and/or photo-thermal stress to the object including the molecule are minimized.

## SOLUTION

The object of the invention is achieved by the methods comprising the features of independent claim 1. Preferred embodiments of the method are defined in the dependent claims.

## DESCRIPTION OF THE INVENTION

The present invention relates to a method of determining a molecule position of a singularized fluorophore molecule in an object.

A singularized fluorophore molecule is spatially separated from other fluorophore molecules which are excitable by the same excitation light for the emission of non-distinguishable fluorescence light. The fluorophore molecule whose molecule position is to be determined may be singularized naturally, like, for example, due to a low concentration of the fluorophore molecules in the object. Alternatively, the fluorophore molecule may be actively singularized by bleaching or temporarily switching-off neighboring fluorophore molecules, or by only switching on a single fluorophore molecule while leaving neighboring fluorophore molecules in a dark state. Methods of singularizing fluorophore molecules and checking whether indeed only one singularized molecule is present in a measurement volume are known to those of skill in the art. Suitable minimum distances of a singularized fluorophore molecule to neighboring fluorophore molecules are in the order of the wavelength of the excitation light with some embodiments of the present invention only involving the excitation light. In other embodiments of the present invention additionally involving fluorescence inhibition light, much smaller distances may still be suitable. Generally, a suitable distance of the singularized fluorophore molecule to neighboring fluorophore molecules should ensure that these neighboring fluorophore molecules are not excited for the emission of fluorescence light that cannot be separately registered from the fluorescence light that is emitted by the singularized fluorophore molecule whose position is to be determined.

The method according to the present invention comprises the step of providing a light beam including fluorescence excitation light and fluorescence influencing light. The fluorescence influencing light may be identical to the fluorescence excitation light, or the fluorescence influencing light may be fluorescence inhibition light applied in addition to the fluorescence excitation light. The additional fluorescence inhibition light may, for example, be STED (stimulated emission depletion) light which influences the fluorescence of the fluorophore molecule by returning the fluorophore molecule out of an excited state, into which the fluorophore molecule has been excited by the excitation light, back into its ground state before the excited fluorophore molecule is able to spontaneously emit fluorescence light.

The method according to the invention further comprises the steps of shaping and focusing the light beam such as to form a light intensity distribution having a central intensity minimum of the fluorescence influencing light. Even further, the method according to the invention comprises the step of continuously shifting the light intensity distribution with regard to the object such that the central intensity minimum is continuously moved along a track repeatedly extending around an estimated position of the singularized fluorophore molecule. The feature that the track repeatedly extends around the estimated position may be implemented in that the track surrounds or encircles the estimated position. However, there is no need that the track runs around the estimated position at a fixed distance. Particularly, the track may purposefully temporarily get very close to or even pass through the estimated position. However, the overall area spanned or enclosed by the track will extend around the estimated position in all spatial dimensions in which the molecule position of the singularized fluorophore molecule is to be determined.

The method according to the present invention also includes the steps of individually registering a plurality of individual photons of fluorescence light emitted by the singularized fluorophore molecule due to excitation by the fluorescence excitation light, and of recording an intensity minimum position of the central intensity minimum for the excitation of each individual photon of the plurality of individual photons registered. Thus, as much information on the molecule positon to be determined as possible is drawn from each individual photon registered.

In response to each individual photon of the plurality of individual photons registered, the estimated position around which the track leads is updated on basis of the recorded intensity minimum position, and extensions of the track around the estimated position are reduced and/or a fluorescence influencing effectiveness of the fluorescence influencing light is increased.

In case of the fluorescence influencing light being identical to the fluorescence excitation light, the estimated position will be moved away from the recorded intensity minimum position. In case of the fluorescence influencing light being fluorescence inhibition light, the estimated position will be moved towards the recorded intensity minimum position. The new estimated position will be closer to the real molecule position than the previous estimated position at a suitable probability. Thus, the extensions of the track, i.e. the extensions of the area around the estimated position enclosed by the track may be reduced. Simultaneously or alternatively, the fluorescence influencing effectiveness of the fluorescence influencing light may be increased. As the light intensity distribution formed in the method according to the present invention has a central intensity minimum of the fluorescence influencing light, the intensity of the fluorescence influencing light increases with increasing distance to the central intensity minimum. An increase of the fluorescence influencing effectiveness means, that the increase of the effect of the increasing intensity of the fluorescence influencing light is enhanced.

Generally, there are different ways of increasing the fluorescence influencing effectiveness of the fluorescence influencing light. For example, an intensity of the fluorescence influencing light may be increased. Thus, it is clear that the term effectiveness of the fluorescence influencing light does not necessarily relate to a relative effectiveness of the fluorescence influencing light, i. e. not to a measure of the effect divided by the intensity of the fluorescence influencing light here, but to an absolute effectiveness or effect of the fluorescence influencing light. Alternatively or additionally, the fluorescence influencing effectiveness of the fluorescence influencing light may be increased in that an effective fluorescence influencing cross section of the fluorescence influencing light is increased. This may, for example, be accomplished by varying a wavelength or a wavelength composition of the fluorescence influencing light.

If the wavelength or the wavelength composition of the fluorescence influencing light is altered, it may be necessary to care for chromatic aberrations in the optical setup. As a general rule, the optical setup should be tuned to that wavelength or wavelength composition of the fluorescence influencing light at which the effective fluorescence influencing cross section of the fluorescence influencing light is maximized. Thus, the optical setup should typically be fine-tuned to the minimum wavelength of the fluorescence influencing light.

According to the invention, a temporal succession of pulses of the fluorescence influencing light and of pulses of the fluorescence excitation light is altered additionally or alternatively. This alteration strongly affects the fluorescence influencing effectiveness even when keeping the intensities of the fluorescence influencing light and of the fluorescence excitation light constant. This may apply both with the fluorescence influencing light being the fluorescence excitation light and with the fluorescence influencing light being fluorescence inhibition light. Using constant intensities of the fluorescence influencing light and of the fluorescence excitation light and only varying or altering the temporal succession of pulses of the fluorescence influencing light and of pulses of the fluorescence excitation light keeps the light power constant which is applied to and absorbed by an object. Thus, for example, the increase of the fluorescence influencing effectiveness does not come along with increased thermal effects. This concept of increasing the fluorescence influencing effectiveness of the fluorescence influencing light is particularly effective if the fluorescence influencing light is fluorescence inhibition light. Further, the fluorescence inhibition light pulses should not be longer or even be shorter than the fluorescence lifetime of the fluorophore molecule but much longer, i.e. at least three, five or even ten times longer than the excitation light pulses. The detection of the photons of the fluorescence light may be gated to select only photons emitted after the fluorescence inhibition light pulse to block signal from the fluorophore molecule that did not yet experience the complete fluorescence inhibition light pulse. Keeping the detection time gate after the fluorescence inhibition light pulses and shifting the excitation maximizes the fluorescence light detection.

The above concept of keeping the thermal effects constant may be particularly helpful in implementing embodiments of the present invention in which the track extends around the estimated position of the singularized fluorophore molecule in all three spatial dimensions in order to determine the molecule position of the singularized fluorophore molecule in all three spatial dimensions.

In summary, in the method according to the present invention, every photon is used to update the estimated position of the fluorophore molecule, and every update of the estimated position is used to tighten the track around the estimated positon and/or to increase the effect of the fluorescence influencing light in the surroundings of its central intensity minimum. In combination of these measures, the molecule position is very quickly determined at a very high precision of very few nanometer down to about one nanometer.

Fluorescence inhibition by STED is usually performed at a STED wavelength at the far-red edge of the fluorophore's emission spectrum to avoid direct excitation of the fluorophore by the STED light and to maximize the detection spectrum, enclosed by the excitation and STED wavelengths. As the stimulated emission cross-section is low, STED at the far-red edge of the emission spectrum is inefficient and therefore requires high STED power, which in turn may result in serious thermal issues as described above.

In the method according to the present invention using STED light, the STED wavelength may be set or at least successively reduced to a wavelength at which a fluorescence light emission peak of the singularized fluorophore molecule still has at least 25 %, preferably at least 30 %, and more preferably at least 35 % of its maximum peak intensity. If the STED wavelength is successively reduced to increase the fluorescence influencing effectiveness of the STED light, it may even start at a wavelength fulfilling at least one of these criteria.

The method according to the present invention using STED light does not expose the singularized fluorophore molecule to high STED intensities. Further, there are no other fluorophore molecules in the area of the maxima of the STED light intensity enclosing the central intensity minimum of the STED light. Thus, it is possible to select a STED wavelength much closer to the fluorophore molecule's peak emission. Hence, the method according to the present invention allows to increase the stimulated emission cross-section and to therefore lower the STED power that is required for a given effective PSF FWHM. The reduction in STED power required may be about an order of magnitude, which may be sufficient to avoid the serious thermal issues described above such that the full precision potential of the method according to the present invention can be realized.

If the fluorescence light is edge- or more preferably notch-filtered to suppress light of the STED wavelength prior to registering the plurality of individual photons, the STED wavelength within the emission peak of the fluorophore molecule will not produce any significant background in the step of registering. Notch-filtering the fluorescence light for suppressing the light of the STED wavelength is particularly effective, if the STED light is provided with a narrow bandwidth of the STED wavelength. If the STED light is applied in pulses, registering the plurality of individual photons may be gated to select photons emitted after the respective pulse of the STED light to further suppress a background due to the STED light in the step of registering. Generally, however, the STED light may alternatively be applied as a continuous wave (cw). Particularly, those embodiments of the invention in which the STED wavelength is successively reduced may be implemented using cw STED light due to the commercial availability of frequency-tuneable cw lasers.

In the method according to the present invention, the estimated position around which the track extends may be updated on basis of the recorded intensity minimum position in that the estimated position is shifted in a direction depending on whether the fluorescence influencing light is the fluorescence excitation light or additional fluorescence inhibition light and by a predetermined distance fraction of a distance between the estimated position and the recorded intensity minimum position. This distance may be in a range from 3 % to 33 %. Preferably, the distance fraction is in a range from 10 % to 20 %, i.e. about 15 %. With a smaller distance fraction, the estimated position may be shifted slower towards the molecule position needing more photons registered for determining the molecule position at a certain precision. With a higher distance fraction, the progress of the estimated position is quicker but there is a danger of repeatedly passing the molecule position with the estimated position in different or opposite directions.

In the method according to the present invention, the extensions of the track around the estimated position may be reduced by an extensions fraction which is in a range from 1 % to 10% and preferably from 2 % to 5 %. Thus, the steps at which the extensions of the track around the estimated position are reduced are at least somewhat smaller than the steps at which the estimated position is shifted per photon registered.

The fluorescence influencing effectiveness of the fluorescence influencing light may particularly be increased such that extensions of an effective excitation point spread function of the light intensity distribution and/or an effective point spread function of the registered fluorescence light are reduced accordingly, i.e. preferably also by the extensions fraction. Thus, the extensions of the track around the estimated position and the effective excitation point spread function of the light intensity distribution are scaled down synchronously, photon by photon. In case of the fluorescence influencing light being the fluorescence excitation light, the effective excitation point spread function of the light intensity distribution will be the point spread function of the central intensity minimum of the fluorescence excitation light. In case of the fluorescence influencing light being additional fluorescence inhibition light, the effective excitation point spread function of the light intensity distribution will be the point spread function of a central intensity maximum of the fluorescence excitation light deformed by the point spread function of the fluorescence inhibition light, i.e. confined to a narrow spot or peak close to the central intensity minimum of the fluorescence inhibition light.

In the method according to the invention, the extensions of the track around the estimated position are reduced, unless predetermined minimum extensions have been reached, and/or the fluorescence influencing effectiveness or the fluorescence influencing light is increased, unless the predetermined maximum fluorescence influencing effectiveness has been reached. The extensions of the track around the estimated position are correlated with the precision at which the molecule position has already been determined. Thus, reaching predetermined minimum extensions means reaching a predetermined precision in determining the molecule position. It may be impossible or useless to exceed a predetermined maximum fluorescence influencing effectiveness, because of the related photo-chemical stress to the fluorophore molecule and/or photo-thermal stress to the object or sample including the molecule, and/or because of a limited fluorescence influencing light power available.

In the method according to the present invention, despite the updated estimated position and the reduced dimensions of the track and/or the increased intensity of the fluorescence influencing light, the movement of the central intensity minimum along the track may be continued over the individual photons registered. This implies that neither the estimated position is updated stepwise nor the extensions of the track are reduced stepwise. Particularly, with quickly moving the central intensity minimum along the track, stepwise alterations to the estimated position, i.e. the center of the area enclosed by the track and the extensions of the track or the area enclosed by the track may even not be possible at all or at least quite complicated, and they would have no particular benefit. This also applies to the increase of the effectiveness of the fluorescence influencing light.

In the method according to the present invention, a repetition rate at which the track extends or the central intensity minimum moving along the track moves around the estimated position of the singularized fluorophore molecule is at least 50 % and preferably at least 100 % of a photon rate at which the individual photons are registered. This means, that in average not more than two photons, preferably not more than one photon is registered per loop of the track around the estimated position. Thus, the registrations of the individual photon and the intensity of the minimum positions of the central intensity minimum will be clearly separated along the track. For this same purpose, a signal indicating the individual photons registered may be sampled at a sample rate that is at least ten times, preferably at least 100 times the repetition rate at which the central intensity minimum is moved or the track extends around the estimated position of the singularized fluorophore molecule. A sample rate that is 100 times the repetition rate at which the track extends around the estimated position roughly corresponds to an angular resolution of the recorded intensity minimum positions of the central intensity minimum of $360°/100 = 3.6°$.

In the method according to the present invention, the track may extend around the estimated position of the singularized fluorophore molecule in all three spatial dimensions. In all three spatial dimensions, the extensions of the track around the estimated position preferably reflect extensions of the effective excitation point spread function of the light intensity distribution in the three spatial dimensions. Even more preferably, the extensions of the track around the estimated position reflect that surface area of the effective excitation point spread function at which the ratio of signal variation and signal intensity is at maximum.

In practical terms, in between the responses to two consecutive individual photons of the plurality of individual photons, the track may run on a surface of an ellipsoid having an x-half axis and an y-half axis in a focal plane into which the light beam is focused, and a z-half axis in a z-direction along which the light beam is focused into the focal plane. The x-half axis and the y-half axis may be of equal lengths, and the z-half axis may be longer than the x- and y-half axis. The track may then revolve around the z-direction at a xy-revolution frequency which is not higher than a z-revolution frequency at which the track revolves around an axis rotating in the focal plane at the z-revolution frequency. It is advantageous to choose a small non-integer ratio of the z-revolution frequency and the xy-revolution frequency such that the track approximately repeats every few axial cycles around the z-direction and lateral cycles around the axis rotating in the focal plane without omitting any region around the estimated position for long.

Alternatively, the track may run along a Lissajous curve which preferably passes through the estimated position, in between the responses to two consecutive individual photons of the plurality of individual photons. Moderate rational ratios among revolution or pulsation frequencies in x-, y- and z-directions shorten a repetition period of the Lissajous curve while keeping the sampling around the estimated position sufficiently dense and balanced. If the Lissajous curve passes through the estimated position or at least through interior points located within the extensions of the overall extensions of the track around the estimated position, this will reduce the position uncertainty of the molecule position determined on basis of few photons registered. This particularly applies, if the fluorescence influencing light is identical to the fluorescence excitation light.

In any case, without any response to any photon registered, the track may be a closed loop around the estimated position.

Prior to shaping and focusing the light beams such as to form the light intensity distribution having the central intensity minimum of the fluorescence influencing light, a beam of the fluorescence excitation light may be focused such as to form an excitation-only light intensity distribution having a central intensity maximum. The excitation-only light intensity distribution may be continuously shifted with regard to the object. A preliminary plurality of individual photons of fluorescence light emitted by the singularized fluorophore molecule due to excitation by the fluorescence excitation light may be individually registered with a light detector array spatially resolving an airy disk into which the fluorescence light emitted out of the central intensity maximum is imaged onto the light detector array. A detector array registration position and an intensity maximum position of the central intensity maximum can be recorded for the excitation of each individual photon of the preliminary plurality of individual photons registered, and the estimated position to start with can then be determined from the detector array registration positons and the intensity maximum positions recorded for the preliminary plurality of individual photons registered. Here, a spatial resolution of the registration of the individual photons within the airy disk is used to obtain additional information on the estimated position to start with when executing the core steps of the method according to the present invention.

The method according to the present invention may be used to determine the positions of many fluorophore molecules one by one. Thus, once a molecule position of the singularized fluorophore molecule has been determined, another fluorophore molecule may be singularized and/or headed for, and a further molecule position of the other singularized fluorophore molecule in the object may be determined.

A laser-scanning microscope for determining a molecule position of a singularized fluorophore molecule in an object according to the present invention, comprises a light source configured to provide a light beam including fluorescence excitation light and fluorescence influencing light. The fluorescence influencing light may be identical to the fluorescence excitation light or provided in addition to the fluorescence excitation light. A beam shaper and an objective of the laser-scanning microscope are configured to shape and focus the light beam such as to form a light intensity distribution having a central intensity minimum of the fluorescence influencing light. A scanner of the laser-scanning microscope is configured to continuously shift the light intensity distribution with regard to the object such that the central intensity minimum is continuously moved along a track repeatedly extending around an estimated position of the singularized molecule. A detector of the laser-scanning microscope is configured to individually register a plurality of individual photons of fluorescence light emitted by the singularized molecule due to excitation by the fluorescence excitation light; and a controller of the laser-scanning microscope is configured to record an intensity minimum position of the central intensity minimum for the excitation of each individual photon of the plurality of individual photons registered. The controller is further configured to, in response to each individual photon of the plurality of individual photons registered, update the estimated position around which the track extends on basis of the recorded intensity minimum position, and reduce dimensions of the track around the estimated position and/or increase an fluorescence influencing effectiveness of the fluorescence influencing light, according to the method of the present invention.

Where any part of the laser-scanning microscope is defined using the term *"configured to"*, this generally includes that the respective component of the laser-scanning microscope is configured to and arranged within the laser-scanning microscope to achieve the function defined.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if a light source providing the light beam is mentioned, this is to be understood such that there is exactly one light source or there are two light sources or more light sources providing the light beam. Additional features may be added to the features listed in the claims, or these features may be the only features of the respective method or laser-scanning microscope.

The reference signs contained in the claims are not limiting the extent of the matter protected by the claims. Their sole function is to make the claims easier to understand.

## BRIEF DESCRIPTION OF THE DRAWINGS

In the following, the invention is further explained and described with respect to preferred exemplary embodiments illustrated in the drawings.

| | |
|---|---|
| **Fig. 1** | shows a simplified optical setup of a first embodiment of a laser-scanning microscope which is configured for implementing a first embodiment of a method of determining a molecule position of a singularized fluorophore molecule in an object. |
| **Fig. 2** | shows an electro-optic deflector subsystem of the optical setup shown in Fig. 1. |
| **Fig. 3** | outlines a laser light source including a fiber amplifier that may serve as light source in the optical setup shown in Fig. 1. |
| **Fig. 4A** | illustrates the formation of a typical lateral donut focus, and **Fig. 4B** illustrates the |

formation of a typical axial donut focus for use in the first embodiment of the method.

**Fig. 5**      illustrates a variant of the first embodiment of the method.

**Fig. 6**      shows a simplified optical setup of a second embodiment of the laser-scanning microscope which is configured for localizing fluorophore molecules in a lateral plane implementing major parts of the first embodiment of the method.

**Fig. 7**      shows a simplified optical setup of a third embodiment of the laser-scanning microscope which is configured for implementing a second and a third embodiment of the method.

**Fig. 8**      illustrates a polar orbital track with a 2:1 ratio of $\omega_{xy}$ to $\omega_z$ extending around the estimated position of the fluorophore molecule in a first variant of the second embodiment of the method.

**Fig. 9**      illustrates a polar orbital track with a 5:3 ratio of $\omega_{xy}$ to $\omega_z$ extending around the estimated position of the fluorophore molecule in a second variant of the second embodiment of the method.

**Fig. 10**      illustrates a polar orbital track with a 10:7 ratio of $\omega_{xy}$ to $\omega_z$ extending around the estimated position of the fluorophore molecule in a third variant of the second embodiment of the method.

**Fig. 11**      illustrates a Lissajous curve with a 4:3:2 ratio of $\omega_x$, $\omega_y$ and $\omega_z$, along which the track around the estimated position of the fluorophore molecule may run in the third embodiment of the method.

**Fig. 12**      illustrates a further Lissajous curve with a 5:4:3 ratio of $\omega_x$, $\omega_y$ and $\omega_z$, along which the track around the estimated position of the fluorophore molecule may run in the third embodiment of the method.

**Fig. 13**      shows a simplified optical setup of a further embodiment of the laser-scanning microscope according to the present invention which is configured for implementing a further embodiment of the method.

**Fig. 14A, Fig. 14B** and **Fig. 14C**      illustrate how a fluorescence influencing effectiveness of fluorescence inhibition light can be increased according to the present invention by altering a temporal succession of pulses of the fluorescence inhibition light and of pulses of fluorescence excitation light.

**Fig. 15**      is a flow chart illustrating the steps of an embodiment of the method according to the invention.

## DESCRIPTION OF EXEMPLARY EMBODIMENTS

In a method of determining a molecule position of a singularized fluorophore molecule in an object, in which the object is sampled with a light beam including fluorescence excitation light, a continuous high-frequency sampling on approximately circular trajectories or tracks and immediate updates of an estimated position of the fluorophore molecule for each photon of fluorescence light from the fluorophore molecule enables an aggressive reduction in the signal required for a target position accuracy.

Let an immobile fluorophore molecule be placed at $\vec{r}_p$. The probability $\Pr\{\vec{n} \mid \vec{r}_p\}$ of observing $\vec{n} = (n_1, n_2, ..., n_k)$ photon events at $K$ sampling positions $\vec{r}_k$ ($k = \{1, 2, ..., K\}$) is determined by the likelihood of observing these detections given the point spread function $\mathrm{PSF}(\vec{r})$ of the microscope. Using sampling intervals $\tau_k$ and quasi-simultaneous sampling conditions, the fraction $p_k$ of detections at the sampling position $\vec{r}_k$ is given by

$$p_k = \frac{\tau_k \mathrm{PSF}(\vec{r}_\mathrm{p} - \vec{r}_k)}{\sum_{l=1}^{K} \tau_k \mathrm{PSF}(\vec{r}_\mathrm{p} - \vec{r}_i)}. \tag{1}$$

Let $\vec{r}_0$ be the initially estimated position, i. e. the initial estimate of the molecule position $\vec{r}_p$. The sampling pattern shall be centered at $\vec{C}_0 = \vec{r}_0$ and consist of a cyclic trajectory $\vec{S}(t) = \vec{C}_i + R_i \vec{s}(t)$, where $i$ enumerates the photon detections, $R_i$ is a scaling factor and $\vec{s}(t)$ is a cyclic excursion on the trajectory. For instance, $R_i$ may be the radius and $\vec{s}(t) = (\cos(\omega t), \sin(\omega t))$ the unitary circle with the revolution frequency $\omega = 2\pi f$ and the scan frequency $f$.

If the scan frequency is much higher than the average detection rate, a quasi-simultaneous sampling is performed and the probability of detecting the next photon at any scan position is $p_k$ by equation (1). Immediately after each photon detection, the center shall approach $\vec{r}_p$ and the scan trajectory shall be adjusted to the current localization uncertainty. This update can be implemented by moving the center position a fraction $\alpha$ in direction of the scan position $\vec{S}_i$, where the $j^{\text{th}}$ photon was detected, $\vec{C}_i = (1 - \alpha)\vec{C}_{i-1} + \alpha \vec{S}_i = \vec{C}_{i-1} + \alpha R_{i-1} S_{i-1}$. Hence, the centers $\vec{C}_i$ become a smoothed proxy for the current position estimate of the fluorophore molecule. The magnitude $|\alpha| \leq 1$ defines the characteristic constant of the exponential filter, whereas its sign reflects the increase or decrease of the signal when approaching the PSF center. An increase is present with additional fluorescence inhibition light in the light beam, and a decrease is present with fluorescence excitation light only in the light beam. A small $|\alpha|$ updates the center incrementally and converges slowly. A large $|\alpha|$ moves the center rapidly towards $\vec{r}_p$ but tends to go astray due to dark counts and background. When scanning at about half the maximum of the PSF, the range $0.1 < |\alpha| < 0.3$ typically provides rapid convergence without large overshoots and $0.15 < |\alpha| < 0.2$ features robust convergence even under adverse conditions.

If the average detection rate approaches or exceeds the scan frequency, the center position continuously chases the scan position, which leads to a pursuit curve whose excursions can be damped by decreasing $|\alpha|$. Importantly, the scan trajectory must not be interrupted and reset to the start of a cycle upon photon detections, because this would bias the updates in direction of certain scan positions.

$\vec{S}_i$ is understood as the likely origin of the $i^{\text{th}}$ detected photon that is defined by the center of intensity $\vec{S}(t_i)$ of the effective PSF. If the sensor consists of several elements or detectors, each element or detector $j$ is most sensitive along its own trajectory $\vec{S}_j(t)$ as defined by the center of intensity of its own effective PSF. If the $j^{\text{th}}$ element or detector detects the $i^{\text{th}}$ photon, the center shall be moved in direction of the scan position $\vec{S}_{j,i} = \vec{S}_j(t_i)$ of this element or detector: $\vec{C}_i = (1 - \alpha)\vec{C}_{i-1} + \alpha \vec{S}_{j,i}$.

A refined analysis of all photon detections may be performed *a posteriori*. In particular, the maximum-likelihood estimation of the molecule position may account for the integral scan trajectory $\vec{S}(t)$ and its PSF(t) to match the expected signal with the detected photons. Due to the continuously changing scan trajectory, a complete analysis requires significant calculation resources but may account also for intermittent blinking of the fluorophore molecule and/or for its movement. Simplified estimators are listed below to localize stationary fluorophore molecules by quasi-simultaneous sampling of the molecule's neighborhood.

The molecule position may be estimated by the weighted mean of the centers $\vec{C}_i = (C_{xi}, C_{yi}, C_{zi})$ with weights $X_i^{-2}$, $Y_i^{-2}$ and $Z_i^{-2}$ along the coordinate axes $x$, $y$ and $z$, where $X_i$, $Y_i$ and $Z_i$ are the search ranges $R_i$ with fluorescence excitation light only or, respectively, the FWHM$_i$ of the PSF with additional fluorescence inhibition light along these axes.

$$\hat{\vec{r}}_\mathrm{p} \approx \left( \frac{\sum_i C_{xi} X_i^{-2}}{\sum_i X_i^{-2}}, \quad \frac{\sum_i C_{yi} Y_i^{-2}}{\sum_i Y_i^{-2}}, \quad \frac{\sum_i C_{zi} Z_i^{-2}}{\sum_i Z_i^{-2}} \right) \tag{2}$$

Instead of weighting the detections, the first m detections during the spiraling-in on the fluorophore molecule may be discarded altogether and the center positions may be averaged only for detections at the most confined range.

$$\hat{\vec{r}}_\mathrm{p} \approx \langle \vec{C}_i \rangle_{i > m} \tag{3}$$

Given an approximately balanced sampling in the vicinity of the fluorophore molecule, the molecule position may be estimated by integrating the PSFs placed at the positions $\vec{S}_i$ to obtain a proxy for the probability distribution of its position. The fluorophore molecule is then found most likely at the maximum of this distribution.

$$\hat{\vec{r}}_\mathrm{p} \approx \underset{\vec{r}}{\mathrm{argmax}} \sum_i \mathrm{PSF}_i(\vec{r} - \vec{S}_i) \tag{4}$$

This approach may be extended to account for imbalances in the sampling by dividing the probability distribution from the detections with the sampling probability distribution.

$$\hat{\vec{r}}_{\mathrm{p}} = \underset{\vec{r}}{\mathrm{argmax}} \frac{\sum_i \mathrm{PSF}_i\left(\vec{r} - \vec{S}_i\right)}{\int \mathrm{PSF}_t\left(\vec{r} - \vec{S}(t)\right) \mathrm{d}t} \qquad (5)$$

The localization in a lateral plane is supported by beam scanners that provide scans at several 100 kHz repetition rate over ranges of a few PSF FWHM, such as electro-optic deflectors (EOD). M. Weber et al.: "MINSTED fluorescence localization and nanoscopy", Nat. Phot., 2021, https://doi.org/10.1038/s41566-021-00774-2 demonstrated this concept for the localization in a lateral plane by circling with 125 kHz repetition rate around the estimated position of the molecule. The beam deflection is smoothed by the limited rates of change of the EOD drivers and their input signals, which circularizes the scan trajectory or track but introduces a delay of the true beam position with respect to the commanded position. This delay is to be accounted for when registering the beam positions to the detected photons.

The localization along the optical axis is still challenging because fast scanners do not provide arbitrary positioning of the beam and/or feature a very limited scan range. For instance, resonant axial scanning at several 100 kHz can be achieved by an acousto-optic lens (AOL), which forces the scan on a sinusoidal trajectory and does not allow to center the scan trajectory on the molecule position. Alternatively, electro-optic lenses feature fast arbitrary axial scanning but only in a very limited range of about the depth of field (DOF).

Tracking and localizing a fluorophore molecule continuously in three dimensions can be achieved by combining the advantages of several scanners. For instance, an AOL may feature fast axial sampling; EODs may feature fast lateral sampling; a deformable mirror may feature the axial and lateral centering of the sampling trajectories in a range of several PSF FWHM; galvo-mirror scanners may provide larger scan ranges; and/or stage scanning may position the sample or object in an extended range. Due to the polarization sensitivity of the EODs, it may be advantageous to descan only the center position and collect the signal from the current position estimate. This partial descanning reduces the detection efficiency during the initial coarse localization when the sampling positions lie in the periphery of the detection PSF. However, as the sampling pattern is confined during the localization, the loss in detection efficiency gets insignificant.

The localization or position determination of the fluorophore molecule may be performed by an excitation PSF with donut shape, i.e. with fluorescence excitation light only, like in MINFLUX, or with an excitation PSF that may be confined by additional fluorescence inhibition light, like in MINSTED, which helps to reduce the background in its periphery. In the following, confinement refers to a donut-shaped excitation PSF for fluorescence excitation light only, or a donut-shaped STED PSF sharpening the effective excitation PSF by additional fluorescence inhibition light.

Along the sampling trajectory, the sampling PSF may vary its shape and size. During the localization in one direction, it may be advantageous to apply a sampling PSF with limited confinement along orthogonal directions to reduce the effect of misalignments between the sampling PSF and the molecule position in the orthogonal plane. For instance, the lateral localization may rely on a lateral donut featuring no or weak axial confinement, whereas the axial detection may rely on an axial donut featuring no or weak lateral confinement. In particular, an axially confined PSF may be applied when positions above and below the fluorophore molecule are sampled, whereas a laterally confined PSF may be applied when positions to the left, right, front and rear of the fluorophore molecule are sampled.

As the uncertainty $\sigma_j$ in direction j scales with $\mathrm{L}_j / \sqrt{N_j}$, where $\mathrm{L}_j$ is the characteristic length defined by the PSF FWHM and the scan range R, and where $N_j$ is the number of detected photons from sampling points in the direction j, an isotropic localization or position uncertainty is obtained by $N_j \propto \mathrm{L}_j^2$. This may be achieved by adjusting the sampling durations in the directions *j* and/or the sampling PSF intensities.

In the following, embodiments of the method and optical setups of corresponding embodiments of the laser-scanning microscope will be described. The optical setups illustrate the use of light beams including fluorescence inhibition or STED light in addition to fluorescence excitation light. When using a light beam of fluorescence excitation light only, it may be supplied along the beam path of the fluorescence inhibition or STED light in the optical setups illustrated.

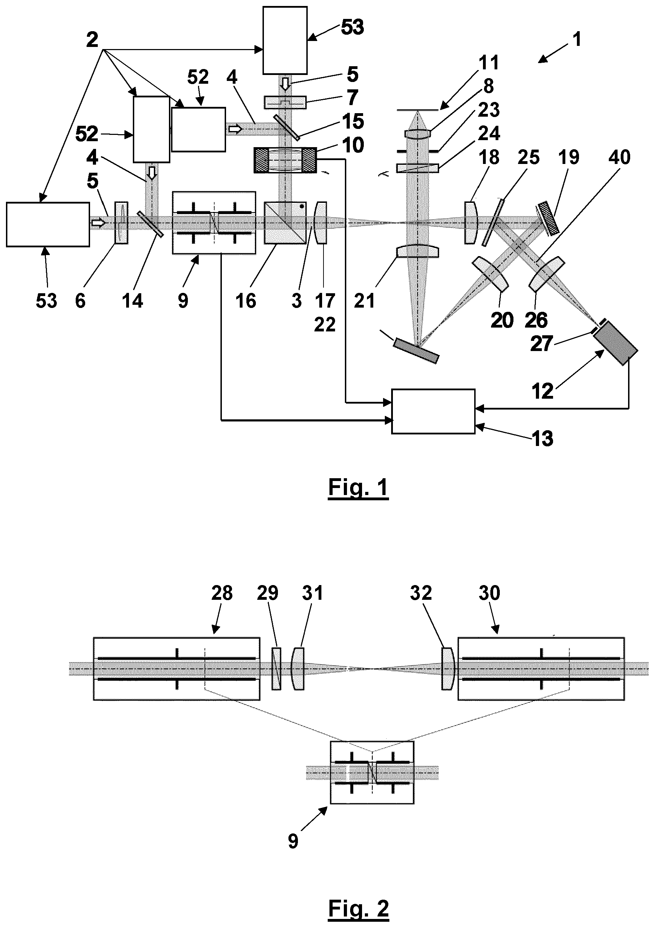

Now referring in greater detail to the drawings, the embodiment of the laser-scanning microscope 1 depicted in **Fig. 1** comprises a light source 2 providing a light beam 3 including fluorescence excitation light 4 and additional STED light as fluorescence inhibition light 5. The light source 2 includes separate excitation light sources 52 and fluorescence inhibition light sources 53. Beam shapers 6 and 7 and an objective lens 8 are configured to shape and focus the light beam 3 such as to form a light intensity distribution having a central intensity minimum of the fluorescence inhibition light 5. Scanners 9 and 10 are provided for continuously shifting the light intensity distribution with regard to an object 11 such that the central intensity minimum is continuously moved along a track repeatedly extending around an estimated position of a singularized molecule whose molecule position in the object 11 is to be determined. A detector 12 individually registers a plurality of individual photons of fluorescence light 40 emitted by the singularized molecule due to excitation by the fluorescence excitation light 4. A controller 13 records an intensity minimum position of the central intensity minimum for the excitation of each individual photon registered by the detector.

More particularly, two pairs of partial beams of the excitation light 4 and the fluorescence influencing light 5 are directed separately in a lateral plane by the scanner 9 made as an EOD scanner 9 and along the optical axis by the scanner 10 made as an AOL in the sample space of the objective lens 8. The beam shaper 6 made as a vortex plate and the beam shaper 7 made as a top-hat plate imprint the required phase profiles on the partial beams of the fluorescence influencing light 5. Dichroic mirrors 14 and 15 merge the pairs of partial beams. A polarizing beam splitter 16 joins the two beam paths. Relay lenses 17 and 18 image the pupils of the EOD scanner 9 and AOL scanner 10 on a deformable mirror 19. Another relay system of relay lenses 20 and 21 and a mirror 22 images the pupils and the deformable mirror 19 in the objective aperture 23. A quarter-wave retardation plate 24 changes the linear laser beam polarizations to circular polarization. Photons of the fluorescence light 40 emitted out of the object 11 are reflected by a dichroic mirror 25, spatially filtered by lens 26 and a pinhole 27 and individually detected by the detector 12 made as a single-photon detecting APD.

Fig. 2 illustrates an electro-optic deflector subsystem of the scanner 9 of Fig. 1 which is provided for scans in the lateral xy plane. An incident linearly polarized laser beam is deflected along a first axis by a first EOD 28. The polarization of the beam is then rotated by 90° using a half-wavelength retardation plate 29, such that the beam can be deflected by a second EOD 30 along a second axis. Lenses 31 and 32 image an apparent deflection plane of the first EOD 28 to an apparent deflection plane of the second EOD 30. In Fig. 1, Fig. 6 and Fig. 7, this subsystem is simplified by EOD scanner 9 and a common deflection plane.

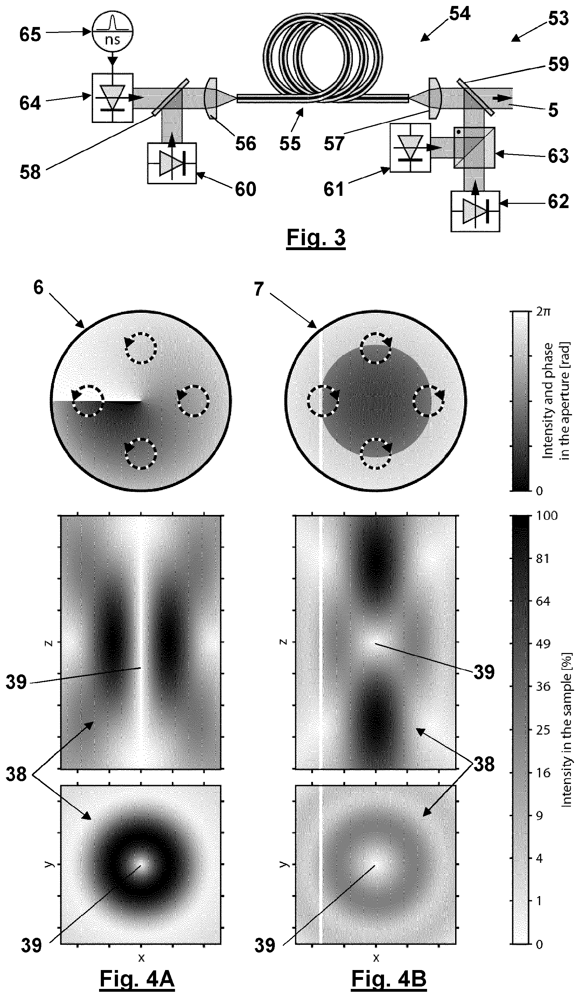

Fig. 3 outlines an inexpensive pulsed fluorescence inhibition light source 53 including a fiber amplifier 54 and completely made of standard components. The fiber amplifier 54 comprises a doped single-mode or double-cladding fiber 55 arranged between two fiber-coupling lenses 56 and 57 and two dichroic mirrors 58 and 59. The doped fiber 55 is pumped by a laser diode 60 via the dichroic mirror 58 from its back end, and by two laser diodes 61 and 62 via a polarizing beam splitter 63 and the dichroic mirror 59 from its front or output end. A further laser diode 64 serves as a seed laser. A high-frequency driver board 65 (depicted schematically) feeds the laser diode 64 with short current pulses to generate laser light with pulse durations of 1-2 ns. These brief laser pulses may be too weak for efficient fluorescence inhibition. In this case, they may be amplified in the doped fiber 55. For instance, a Praseodymium-doped fiber 55 offers high gain at about 490-492 nm, 604-606 nm and 636-638 nm wavelengths when pumped by the laser diodes 60 to 62 with blue light at a pump wavelength of about 450 nm. As the laser diodes 61 and 62 emit polarized light, the pump power may be doubled by combining their laser beams using the polarizing beam splitters like the polarizing beam splitter 63. The dichroic mirrors 58 and 59 reflect the pump light and transmit the seed light from the laser diode 64 and the amplified output, i.e. the fluorescence inhibition light 5. The pulsed fluorescence inhibition light source 53 illustrated in Fig. 3 may be used in all embodiments of the laser-scanning microscope 1. The same design may also be used for excitation light sources 52 and continuous wave fluorescence inhibition light sources 53.

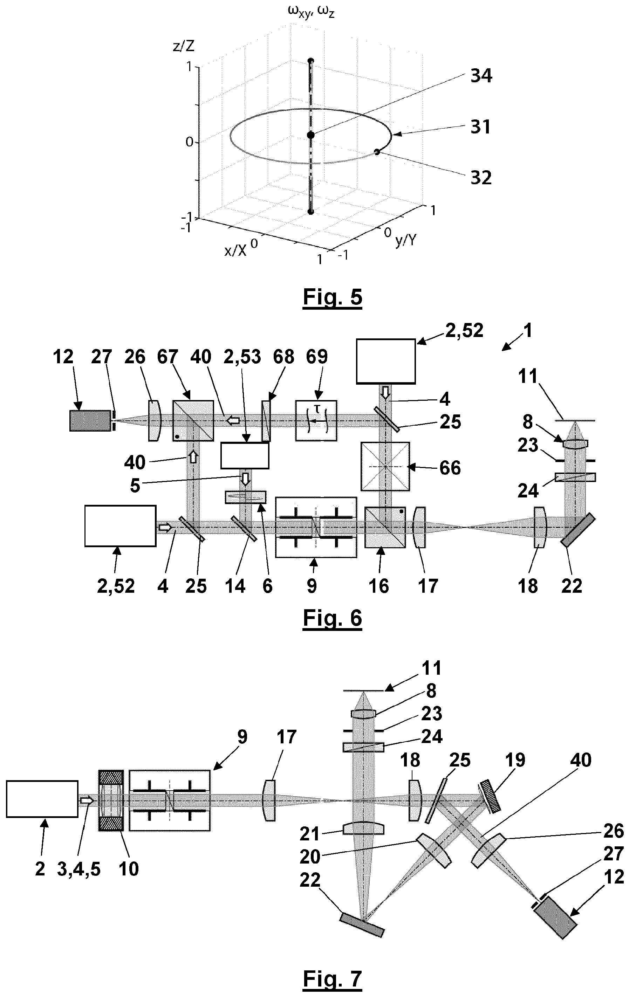

Fig. 4A shows, how a laterally confined PSF is generated by the phase vortex plate beam shaper 6 to create a lateral donut profile, i.e. a light intensity distribution 38 with a central intensity minimum 39 extending along the optical or z-axis, in the object 11. This PSF is laterally scanned by the EOD scanner 9 on periodic trajectories near the fluorophore molecule, preferably on approximately circular or elliptical trajectories around an estimated position 34 of the molecule, see Fig. 5. Fig. 4B shows, how an axially confined PSF is generated by the phase top hat plate beam shaper 7 to create an axial donut profile, i.e. a light intensity distribution 38 with a central intensity minimum 39 enclosed by intensity maxima along the optical or z-axis, in the object 11. This PSF is axially scanned by the AOL scanner 10 on sinusoidal trajectories near the estimated position 34 of the molecule, see Fig. 5. The two beams are set up in separate paths at orthogonal polarizations and they are combined by the polarizing beam splitter 16 of Fig. 1. The deformable mirror 19 controls the center position of all PSFs in the object 11. The dichroic mirror 25 between the polarizing beam splitter 16 and the deformable mirror 19 extracts the photons of the fluorescence light 40 from the fluorophore molecule and directs them to the detector 12. The confocal pinhole 17 in the detection path rejects out-of-focus photons.

The axially confined PSF is scanned continuously up and down but lit preferably only near selected points, for instance near the extremities of the scan range, see Fig. 5. The laterally confined PSF is circled along a track 31 in the lateral plane and lit preferably only during the remaining intervals of the axial scan. Thereby, the estimated position 34 of the fluorophore molecule is updated laterally and axially during alternating intervals. Preferably, the lateral scan $\omega_{xy} \gg \omega_z$ to scan at least a full lateral period during the interruptions of the axial scan. A center position within the track 31 may be sampled during brief intervals of the axial scan and used for the localization in all directions. In this embodiment, the lateral and axial beam scans are decoupled and all sampling trajectories may be sinusoidal. Therefore, both beam scans may be generated in resonance at the highest frequencies of the scanners. Exceeding the resonance frequencies strengthens the damping and allows to alter the scan ranges in fewer cycles.

The embodiment of the laser-scanning microscope 1 depicted in Fig. 6, does without a second pair of partial beams of the excitation light 4 and the fluorescence influencing light 5, in which the beam shaper 7 is made as a top-hat plate to have the axially confined PSF according to Fig. 4B. Thus, there is also no option of scanning the axially confined PSF up and down. Only the laterally confined PSF according to Fig. 4A is generated and circled around the track 31 according to Fig. 5 for the localization with fluorescence inhibition light in a lateral plane. The laser-scanning microscope 1 nevertheless incorporates two excitation paths with orthogonal polarizations of the beams. In the added path, the fluorescence excitation light 4 is deflected by galvanometer mirrors of a galvo scanner 66 for scanning a large field of view with a diffraction-limited resolution. In the other path which corresponds to the path of the partial beams of the excitation light 4 and the fluorescence influencing light 5 for forming the laterally confined PSF in Fig. 1, the fluorescence excitation and inhibition light beams are deflected by the EOD scanner 9 for searching and localizing fluorophore molecules in a small field of view. The two paths are merged towards the sample 11 by the polarizing beam splitter 16. In the small field of view, the laser-scanning microscope 1 detects the fluorescence light 40 of all polarization directions emitted by the fluorophore molecule and coming along any of the two paths to maximize the detection efficiency. The fluorescence light 40 coming along the path through the EOD scanner 9 is fully descanned, whereas the fluorescence light 40 coming along the path through the galvo scanner 66 may be descanned only for the estimated position of the fluorophore molecule because the galvanometers do not operate at the frequency of the EODs. In front of the detector 12, the two parts of the fluorescence light 40 coming along the two paths are merged by a further polarizing beam splitter 67. A half-wavelength retardation plate 68 and the half-wavelength retardation plate 29 in the EOD scanner 9, see Fig. 2, serve for an appropriate rotation of the polarization of the parts of the fluorescence light 40 between the polarizing beam splitters 16 and 67. For time-gated detection, the optical path length of both paths may be matched by an optical delay 69.

In the embodiment of the laser-scanning microscope 1 depicted in **Fig. 7,** the illumination is rapidly scanned in all three dimensions in the sample by the AOL scanner 10 and the EOD scanner 9. The relay lenses 17 and 18 image the pupil of the EOD scanner 9 on the deformable mirror 19. The other relay system of the relay lenses 21 and 22 and the mirror 22 images the pupil and the deformable mirror 19 in the objective aperture 23. The quarter-wave retardation plate 24 changes the linear laser beam polarization to circular polarization. The emitted photons are reflected by the dichroic mirror 25, spatially filtered by the lens 26 and the pinhole 27 and detected by the APD detector 12. If small variations in the beam diameter cannot be accepted when scanning along the optical axis, an additional relay system may image the AOL scanner 10 pupil to the EOD scanner 9 pupil (not shown).

**The embodiment** of the laser-scanning microscope 1 depicted in Fig. 7, may be used for rapidly scanning the sampling PSF in three dimensions, by a combination of the EOD scanner 9 for the lateral positioning and the AOL scanner 10 for the axial positioning. The deformable mirror 19 may position the center of the scan pattern at the estimated position 34 of the fluorophore molecule, such that only the small excursions need be provided by the fast beam scanners.

Periodic trajectories or tracks 31 around the fluorophore molecule may resemble orbits of satellites around the Earth. As the typical PSF is approximately isotropic in a lateral plane but more elongated along the optical axis, an isotropic localization must sample positions along the optical axis more thoroughly than lateral positions. Therefore, a periodic trajectory similar to a polar satellite orbit is advantageous as it encounters the axial points most frequently.

For instance, let the frequency $f_{AOL}$ of the AOL scanner 10 define a revolution frequency $\omega_z = 2\pi f_{AOL}$ and let the lateral excursion be synchronous to the axial excursion. Then, in any plane containing the optical axis, the scan may run on an ellipse. To complete the sampling in the lateral plane, the lateral excursion shall rotate around the axis with a revolution frequency $\omega_{xy} = 2\pi f_{EOD}$. Therefore, the scan trajectory $\vec{s}(t)$ runs on an ellipsoid surface, which shall have half-axes X and Y in the lateral plane and Z along the optical axis.

$$\vec{s}(t) = \begin{pmatrix} X \cos(\omega_z t) \cos(\omega_{xy} t) \\ Y \cos(\omega_z t) \sin(\omega_{xy} t) \\ Z \sin(\omega_z t) \end{pmatrix} \qquad (6)$$

As these scan trajectories never sample the interior of the ellipsoid, they are suitable for localization with a PSF featuring a central maximum such as when using additional fluorescence inhibition light. When using excitation light only, the center may be sampled by a dedicated beam that bypasses the fast scanners and by toggling between the two beams.

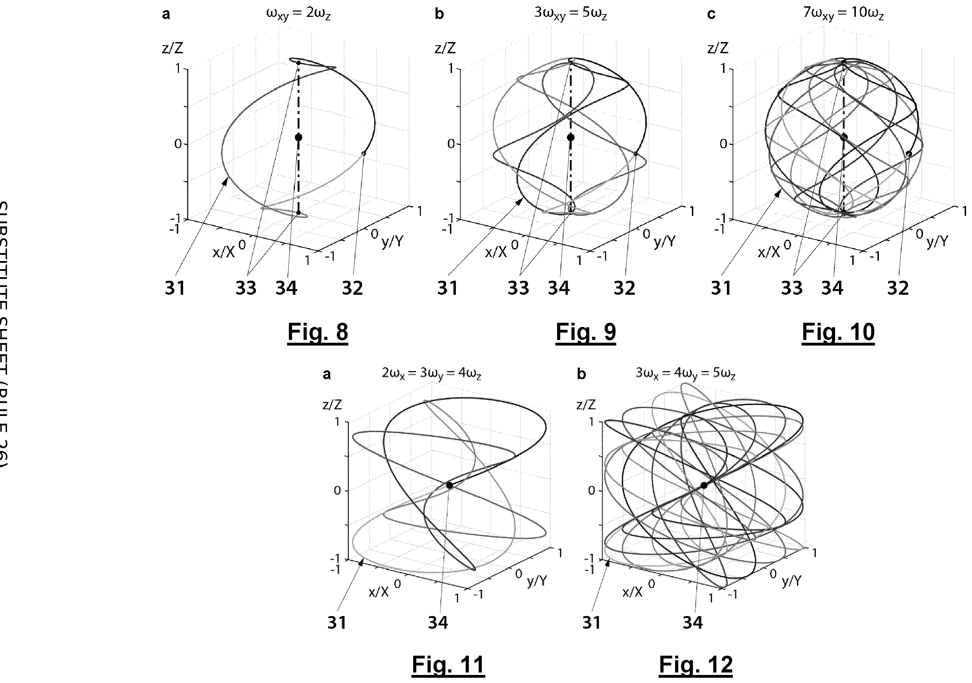

The revolution frequencies should be selected to achieve a balanced sampling of the molecule position from all sides in brief intervals to minimize the effect of variations in the fluorophore molecule's brightness. On the one hand, $\omega_{xy}$ « $\omega_z$ would rotate around the axis too slowly, such that the trajectory would sample only one lateral direction at a time and the orthogonal lateral direction much later. On the other hand, small integer ratios of the revolution frequencies yield sampling trajectories with short common period and thus few distinct sampling points, which may also lead to imbalanced sampling. For instance, $\omega_{xy} = 2\omega_z$ results in a permanently tilted sampling of the molecule position, see **Fig. 8.**

It is advantageous to choose a small non-integer ratio of the revolution frequencies, such that the sampling trajectory or track 31 approximately repeats every few axial and lateral cycles without omitting any region around the fluorophore molecule for long. For instance, $3\omega_{xy} = 5\omega_z$ samples lateral positions every 1.5 axial cycles but the sampling of the ellipsoid surface every 3 axial cycles remains coarse, see **Fig. 9,** whereas $7\omega_{xy} = 10\omega_z$ samples lateral positions about every 2.3 axial cycles only but covers the ellipsoid surface much more densely every 7 axial cycles, see Fig. 10.

In Figs. 6 to 8 the tracks 31 are normalized to their lateral and axial excursions. The start 32 of the track and the axial intersections 33 are marked by dots.

In another embodiment of the method, which may be implemented using the optical setup of Fig. 7, the light beam only consists of fluorescence excitation light 4. Thus, the sampling PSF relies on an axial donut shape exclusively. The sampling PSF is scanned in three dimensions by high-speed scanners on sinusoidal trajectories. A deformable mirror may position the center of the scan pattern at the estimated fluorophore location, such that only the small excursions need be provided by the fast beam scanners.

Utilizing a unique frequency for each scan direction, the molecule position may be sampled on three-dimensional tracks 31 running along Lissajous curves. For instance, starting at the center, the following scan trajectory returns to the center every least common multiple of half-periods along the three scan axes:

$$\vec{s}(t) = \begin{pmatrix} X \sin(\omega_x t) \\ Y \sin(\omega_y t) \\ Z \sin(\omega_z t) \end{pmatrix} \tag{7}$$

Lissajous curves sample the interior of a 2X × 2Y × 2Z box. Small non-integral ratios among the scan frequencies yield a dense sampling at the cost of a long repetition period. Moderate rational ratios among the scan frequencies shorten the repetition period whilst keeping the sampling sufficiently dense and balanced. For instance, $2\omega_x = 3\omega_y = 4\omega_z$ repeats the pattern every 6 cycles of the *x* scan, see **Fig. 11,** equal to $\omega_x = 2\omega_y = 3\omega_z$ but with better balance of the directions, whereas $3\omega_x = 4\omega_y = 5\omega_z$ repeats only every 20 cycles of the *x* scan, see **Fig. 12.** Lissajous curve shaped tracks 31 may be advantageous when using excitation light only as interior points are sampled also.

In Figs. 9 and 10 the tracks 31 are also normalized to their lateral and axial excursions.

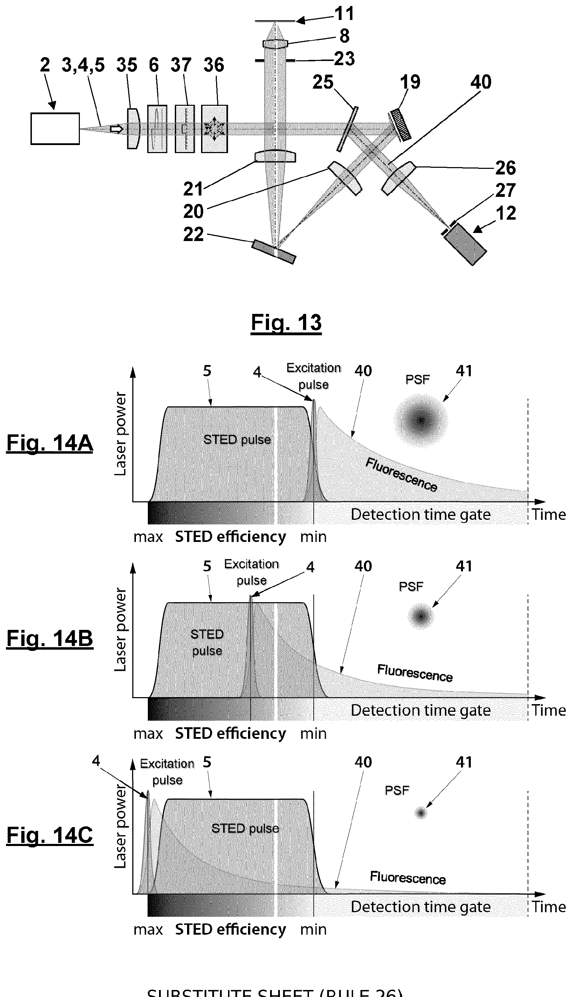

In the embodiment of the laser-scanning microscope 1 depicted in **Fig. 13,** the deformable mirror 19 is used as a scanner to shift the focus in the object 11 also for scanning. The relay system of the lenses 20 and 21 and the mirror 22 images the deformable mirror 19 in the objective aperture 23. The photons emitted by the singularized fluorophore molecule in the sample are reflected by the dichroic mirror 25, spatially filtered by the lens 26 and the pinhole 27 and detected by the APD single-photon detector 12. A further Lens 35 collimates the partial beams of the light beam 3. A chromatic vortex plate 36 imprints a helical phase on the partial beam of the excitation light 4 while keeping the partial beams of the STED or fluorescence inhibition light 5 unchanged. A spatial light modulator 37 imprints a top-hat phase on the linearly polarized partial beam of the fluorescence inhibition light 5 that gets converted to radial polarization by the polarization converter 36. The wave fronts of the orthogonally polarized partial beam of the fluorescence inhibition light 5 and the partial beam of the excitation light 4 are not changed by the spatial light modulator 37 and, both beams are converted to tangential polarization by the chromatic vortex plate 36. The chromatic vortex plate 36 may be an S-wave plate.

In this embodiment, the sampling PSF, i.e. the light intensity distribution 38 having the central intensity minimum 39, relies on a three-dimensional donut-shape PSF with tunable ratio of axial and lateral confinement according to DE 10 2018 127 891 B3. This sampling PSF may be scanned in three dimensions by the deformable mirror 19. This approach features a lean implementation and fully descanned detection at the cost of lower scan frequencies.

**Figs. 14A, 14B** and **14C** illustrate an option how to increase a fluorescence inhibition effectiveness of STED or fluorescence inhibition light 5 used as fluorescence influencing light by altering a temporal succession of pulses of the fluorescence inhibition light 5 and of pulses of fluorescence excitation light 4. This option can also be applied in conventional MINSTED methods.

Localization of a fluorophore molecule using both excitation light 4 and fluorescence inhibition light 5 in continuously smaller search ranges requires a concomitant increase in the fluorescence influencing effectiveness to squeeze down the effective PSF FWHM. This confinement by the fluorescence inhibition light 5 involves a significant fluorescence inhibition light power, which may heat the sample or object 11, the cover slide, the optical system and the immersion liquid. Rapid changes in temperature due to variations in light power are problematic because they change the refraction indices of the optical materials in the illumination path, thus cause an apparent displacement of the sample. Temperature variations in the immersion liquid are particularly critical. Closed-loop stabilization of the sample position is typically too slow to cancel these apparent sample displacements.

Fortunately, the fluorescence inhibition effectiveness of STED or fluorescence inhibition light 5 can be tuned at constant STED or fluorescence inhibition light power by modifying the delay between excitation light and STED pulses. If, for instance, the excitation light pulse is timed right after the STED or fluorescence inhibition light pulse, see Fig. 14A, the STED or inhibition effect is avoided and a diffraction-limited effective PSF is obtained. On the other hand, if the excitation light pulse is timed right before the STED or fluorescence inhibition light pulse, see Fig. 14C, the inhibition effect is maximal and the most confined effective PSF is obtained. Timing the excitation light pulse within the duration of the STED or fluorescence inhibition light pulse, see Fig. 14B, allows to tune the inhibition efficiency and thereby the effective PSF FWHM. This approach may be implemented by STED or fluorescence inhibition light pulses with a duration $\tau_{STED}$ shorter than about the fluorescence lifetime $\tau_{fl}$ but much longer than the duration $\tau_{ex}$ of the excitation light pulses, $\tau_{ex} \ll \tau_{STED} < \tau_{fl}$.

The detection of the fluorescence light 40 may be gated to select only photons detected after the STED or fluorescence inhibition light pulse to block signal from fluorophores that did not yet experience the complete STED or fluorescence inhibition light pulse. Keeping the detection time gate after the STED or fluorescence inhibition light pulse and shifting the excitation maximizes the fluorescence light detection.

Fluorescence inhibition by STED is usually performed at a wavelength at the far-red edge of the fluorophore's emission spectrum to avoid direct excitation of the fluorophore by the STED light and to maximize the detection spectrum, enclosed by the excitation and STED wavelengths. As the stimulated emission cross-section is low, STED at the far-red edge of the emission spectrum is inefficient and therefore requires high STED power, which in turn may result in thermal issues as described above.

Fortunately, the method according to the present invention using fluorescence inhibition light does not expose the fluorophore to high STED intensities. Thus, it allows for STED wavelengths closer to the fluorophore's peak emission. Hence, the method according to the present invention allows to increase the stimulated emission cross-section and thereby lower the STED power that is required for a given effective PSF FWHM. The reduction may be about an order of magnitude, which may be sufficient to avoid thermal issues.

The STED wavelength may be reduced during the localization of a fluorophore molecule. In this case, the fluorescence inhibition effectiveness increases when the wavelength is successively blue-shifted from the red tail of the fluorophore's emission spectrum towards its emission maximum, which may allow for keeping the STED power constant. Achromatic beam shapers and optics may produce the desired STED focus for all wavelengths. The effect of residual chromatic aberrations may be minimized by perfecting the STED focus for the final localization at highest fluorescence inhibition effectiveness.

Further, temperature variations of the optics and the immersion liquid in the illumination path may be kept minimal by compensating variations in heating due to variable illumination powers with a separate near-infrared or infrared beam for heating. The powers of the illumination and heating beams shall be balanced, such that the overall heating remains constant.

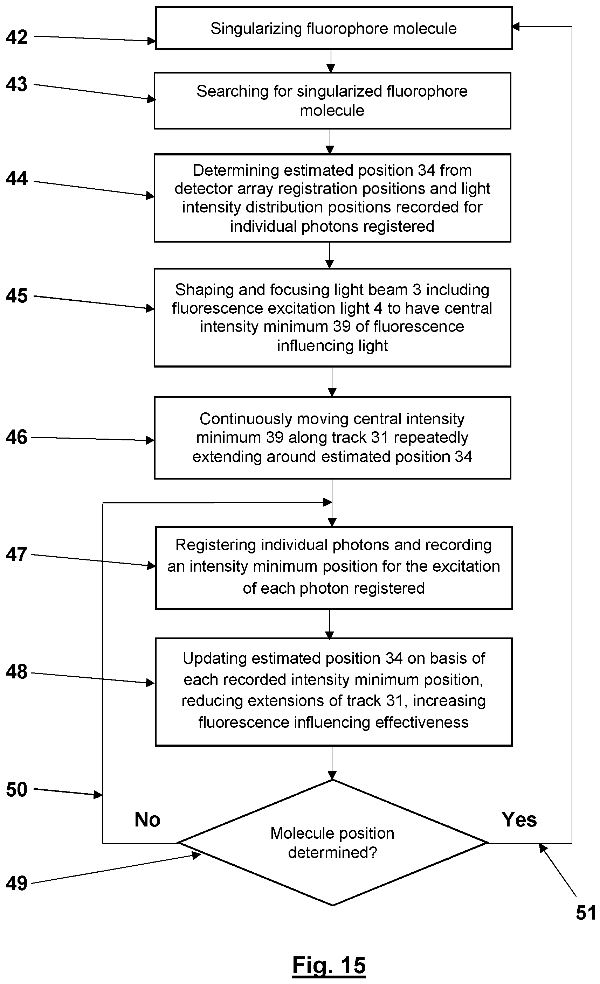

The embodiment of the method of the present invention which is illustrated in **Fig. 15** in a flow chart starts with a step 42 of singularizing a fluorophore molecule from neighboring fluorophore molecules within an object 11 such that the singularized molecule will effectively be excited individually for the emission of the fluorescence light 40 whose photons are registered in the succeeding steps. The step 42 is not mandatory, if the fluorophore molecules in the object 11 are already singularized. Next, in a step 43 of searching for the singularized molecule, a beam of fluorescence excitation light is focused such as to form an excitation-only light intensity distribution having a central intensity maximum. The excitation-only light intensity distribution is continuously shifted with regard to the object 11. A preliminary plurality of individual photons of fluorescence light emitted by the singularized fluorophore molecule due to excitation by the fluorescence excitation light are individually registered with a light detector array spatially resolving a distribution into which the fluorescence light emitted out of the central intensity maximum is imaged onto the light detector array. A detector array registration position and an intensity maximum position of the central intensity maximum for the excitation of each individual photon registered are recorded. In a step 44 of determining the estimated position 34, the estimated position 34 to start with is determined from the detector array registration positions and the intensity maximum positions recorded for the preliminary plurality of individual photons registered. Next, in a step 45 of shaping and focusing the light beam 3, the light beam 3 including the fluorescence excitation light 4 and the fluorescence influencing light 5 is provided and shaped and focused such as to form the light intensity distribution 38 having the central intensity minimum 39 of the fluorescence influencing light. In a step 46 of continuously moving the central intensity minimum, the light intensity distribution 38 is continuously shifted with regard to the object 11 such that the central intensity minimum 39 is continuously moved along a track 31 repeatedly extending around the estimated position 34 of the singularized fluorophore molecule. In a step 47 of registering a plurality of individual photons of fluorescence light 40 emitted by the singularized fluorophore molecule due to the excitation by the fluorescence excitation light 4 are individually registered. Further, an intensity minimum position of the central intensity minimum 39 is recorded for the excitation of each individual photon registered. In a step 48 of updating, in response to each individual photon of the plurality of individual photons registered, the estimated position 34 around which the track extends is updated on basis of the recorded intensity minimum position, and extensions of the track 31 around the estimated position 34 are reduced and/or a fluorescence influencing effectiveness of the fluorescence influencing light is increased. Depending on the outcome of a query 49 whether the molecule position has already been determined at a desired accuracy (or if the fluorophore molecule has ceased emission of fluorescence light), the steps 47 and 48 are repeated in a loop 50, or the method restarts in a larger loop 51 at step 42 with singularizing another fluorophore molecule in the object 11 (or directly with searching and heading for another already singularized fluorophore molecule in the object 11 according to steps 43 and 44).

## LIST OF REFERENCE NUMERALS

| 1 | Laser-scanning microscope |
|---|---|
| 2 | Light source |
| 3 | Beam |
| 4 | Excitation light |
| 5 | Inhibition light |
| 6 | Beam shaper |
| 7 | Beam shaper |
| 8 | Objective lens |
| 9 | EOD scanner |
| 10 | AOL scanner |
| 11 | Object |
| 12 | Detector |
| 13 | Controller |
| 14 | Dichroic mirror |
| 15 | Dichroic mirror |
| 16 | Polarizing beam splitter |
| 17 | Relay lens |
| 18 | Relay lens |
| 19 | Deformable mirror |
| 20 | Relay lens |
| 21 | Relay lens |
| 22 | Mirror |
| 23 | Objective aperture |
| 24 | Quarter-wave retardation plate |
| 25 | Dichroic mirror |
| 26 | Lens |
| 27 | Pinhole |
| 28 | EOD |
| 29 | Half-wavelength retardation plate |
| 30 | EOD |
| 31 | Track |
| 32 | Start of the track 31 |
| 33 | Axial intersection |
| 34 | Estimated position |
| 35 | Lens |
| 36 | Chromatic vortex plate |
| 37 | Spatial light modulator |
| 38 | Light intensity distribution |
| 39 | Central intensity minimum |
| 40 | Fluorescence light |
| 41 | Effective point spread function |
| 42 | Step of singularizing fluorophore molecule |
| 43 | Step of searching for singularized fluorophore molecule |
| 44 | Step of determining estimated position |
| 45 | Step of shaping and focusing |
| 46 | Step of continuously moving central intensity minimum 39 |
| 47 | Step of registering individual photons |
| 48 | Step of updating |
| 49 | Query |
| 50 | Loop |
| 51 | Loop |
| 52 | Excitation light source |
| 53 | Fluorescence light source |
| 54 | Fiber amplifier |
| 55 | Fiber |
| 56 | Fiber-coupling lens |
| 57 | Fiber-coupling lens |
| 58 | Dichroic mirror |

| | |
|---|---|
| 59 | Dichroic mirror |
| 60 | Laser diode |
| 61 | Laser diode |
| 62 | Laser diode |
| 63 | Beam splitter |
| 64 | Seed laser |
| 65 | Signal generator |
| 66 | Galvo scanner |
| 67 | Polarizing beam splitter |
| 68 | Half-wavelength retardation plate |
| 69 | Optical delay |

**Claims**

1.  A method of determining a molecule position of a singularized fluorophore molecule in an object (11), the method comprising:

    - providing a light beam (3) including fluorescence excitation light (4) and fluorescence influencing light, wherein the fluorescence influencing light is identical to the fluorescence excitation light (4) or wherein the fluorescence influencing light is fluorescence inhibition light (5) provided in addition to the fluorescence excitation light (4);
    - shaping and focusing the light beam (3) such as to form a light intensity distribution (38) having a central intensity minimum (39) of the fluorescence influencing light;
    - continuously shifting the light intensity distribution (38) with regard to the object (11) such that the central intensity minimum (39) is continuously moved along a track (31) repeatedly extending around an estimated position (34) of the singularized fluorophore molecule;
    - increasing a fluorescence influencing effectiveness of the fluorescence influencing light;
    - individually registering a plurality of individual photons of fluorescence light (40) emitted by the singularized fluorophore molecule due to excitation by the fluorescence excitation light (4); and
    - recording an intensity minimum position of the central intensity minimum (39) for the excitation of each individual photon of the plurality of individual photons registered;
    - and, in response to each individual photon of the plurality of individual photons registered,

        - updating the estimated position (34) around which the track extends on basis of the recorded intensity minimum position, and
        - reducing extensions of the track (31) around the estimated position (34) and/or increasing the fluorescence influencing effectiveness of the fluorescence influencing light,

    **characterized in that** the fluorescence influencing effectiveness of the fluorescence influencing light is increased by altering a temporal succession of pulses of the fluorescence influencing light and of pulses of the fluorescence excitation light (4).

2.  The method of claim 1, **characterized in that** intensities of the fluorescence influencing light and of the fluorescence excitation light (4) are kept constant.

3.  The method of claim 1 or 2, **characterized in that** the fluorescence influencing light is fluorescence inhibition light (5), particularly STED light, wherein the fluorescence influencing light pulses are not longer than a fluorescence lifetime of the fluorophore molecule but longer than the excitation light pulses.

4.  The method of claim 3, **characterized in that** registering the photons of the fluorescence light (40) is gated to select photons emitted after the respective fluorescence influencing light pulse and to block photons from the fluorophore molecule that did not yet experience the respective complete fluorescence influencing light pulse.

5.  The method of any of the claims 1 to 4, **characterized in that** the track (31) extends around the estimated position (34) of the singularized fluorophore molecule in all three spatial dimensions.

6.  The method of any of the preceding claims, **characterized in that** the estimated position around which the track extends is updated on basis of the recorded intensity minimum position

- **in that** the estimated position (34) is shifted away from the recorded intensity minimum position, if the fluorescence influencing light is identical to the fluorescence excitation light (4), or
- **in that** the estimated position (34) is shifted towards the recorded intensity minimum position, if the fluorescence inhibition light (5) is provided in addition to the fluorescence excitation light (4),

by a predetermined distance fraction of a distance between the estimated position (34) and the recorded intensity minimum position, wherein the distance fraction is in a range from 3 % to 33 % and preferably from 10 % to 20 %.

7. The method of any of the preceding claims, **characterized in that** the extensions of the track (31) around the estimated position (34) are reduced by an extensions fraction which is in a range from 1 % to 10% and preferably from 2 % to 5 %, wherein the fluorescence influencing effectiveness of the fluorescence influencing light is increased such that extensions of an effective excitation point spread function of the light intensity distribution are reduced accordingly, preferably also by the extensions fraction.

8. The method of any of the preceding claims, **characterized in that** the extensions of the track (31) around the estimated position (34) are reduced, unless predetermined minimum extensions have been reached, and/or the fluorescence influencing effectiveness of the fluorescence influencing light is increased, unless a predetermined maximum fluorescence influencing effectiveness has been reached.

9. The method of any of the preceding claims, **characterized in that**, despite the updated estimated position (34) and the reduced extensions of the track (31) and/or the increased fluorescence influencing effectiveness of the fluorescence influencing light, the movement of the central intensity minimum (39) along the track (31) is continued over the individual photons registered.

10. The method of any of the preceding claims, **characterized in**

- **that** a repetition rate at which the track (31) extends around the estimated position (34) of the singularized fluorophore molecule is at least 50 % and preferably at least 100 % of a photon rate at which the individual photons are registered, and/or
- **that** a signal indicating the individual photons registered is sampled at a sample rate that is at least 10 times, preferably at least 100 times a (or the) repetition rate at which the track (31) extends around the estimated position (34) of the singularized fluorophore molecule.

11. The method of any of the preceding claims, **characterized in that** the track (31) extends around the estimated position (34) of the singularized fluorophore molecule in all three spatial dimensions, wherein the extensions of the track (31) around the estimated position (34) in the three spatial dimensions preferably reflect extensions of an (or the) effective excitation point spread function (41) of the light intensity distribution (39) in the three spatial dimensions.

12. The method of claim 11, **characterized in that**, in between the responses to two consecutive individual photons of the plurality of individual photons, the track (31) runs

- on a surface of an ellipsoid having an x-half axis and y-half axis in a focal plane into which the light beam is focused and a z-half axis in a z-direction along which the light beam (3) is focused into the focal plane, wherein the track (31) preferably revolves around the z-direction at an xy-revolution frequency which is not higher than an z-revolution frequency at which the track (31) revolves around an axis rotating in the focal plane at the z-revolution frequency, or
- along a Lissajous curve, wherein the Lissajous curve preferably passes through the estimated position (34).

13. The method of any of the preceding claims, **characterized in that**, without any response to any photon registered, the track (31) is a closed loop.

14. The method of any of the preceding claims, **characterized by,** prior to shaping and focusing the light beam (3) such as to form the light intensity distribution having the central intensity minimum of the fluorescence influencing light,

- focusing a beam of the fluorescence excitation light such as to form an excitation-only light intensity distribution having a central intensity maximum;
- continuously shifting the excitation-only light intensity distribution with regard to the object;
- individually registering a preliminary plurality of individual photons of fluorescence light emitted by the singularized fluorophore molecule due to excitation by the fluorescence excitation light with a light detector array spatially resolving a distribution into which the fluorescence light emitted out of the central intensity maximum is imaged onto the light detector array;

- recording a detector array registration position and an intensity maximum position of the central intensity maximum for the excitation of each individual photon of the preliminary plurality of individual photons registered; and

- determining the estimated position (34) to start with from the detector array registration positions and the intensity maximum positions recorded for the preliminary plurality of individual photons registered.

15. The method of any of the preceding claims, **characterized in that** once the molecule position of the singularized fluorophore molecule has been determined, another fluorophore molecule is singularized and a further molecule position of the other singularized fluorophore molecule in the object is determined.

**Patentansprüche**

1. Verfahren zum Bestimmen einer Molekülposition eines vereinzelten Fluorophor-Moleküls in einem Objekt (11), wobei das Verfahren aufweist:

- Bereitstellen eines Lichtstrahls (3), der Fluoreszenzanregungslicht (4) und Fluoreszenzbeeinflussungslicht umfasst, wobei das Fluoreszenzbeeinflussungslicht mit dem Fluoreszenzanregungslicht (4) identisch ist oder wobei das Fluoreszenzbeeinflussungslicht zusätzlich zu dem Fluoreszenzanregungslicht (4) bereitgestelltes Fluoreszenzunterdrückungslicht (5) ist;
- Formen und Fokussieren des Lichtstrahls (3), um eine Lichtintensitätsverteilung (38) mit einem zentralen Intensitätsminimum (39) des Fluoreszenzbeeinflussungslichts zu erzeugen;
- kontinuierliches Verschieben der Intensitätsverteilung (38) relativ zu dem Objekt (11), so dass das zentrale Intensitätsminimum (39) kontinuierlich entlang einer Bahn (31) bewegt wird, die sich wiederholt um eine geschätzte Position (34) des vereinzelten Fluorophor-Moleküls herum erstreckt;
- Erhöhen einer Fluoreszenzbeeinflussungs-Effektivität des Fluoreszenzbeeinflussungslichts;
- einzelnes Registrieren einer Mehrzahl von Photonen von Fluoreszenzlicht (40), das von dem vereinzelten Fluorophor-Molekül aufgrund von Anregung durch das Fluoreszenzanregungslicht (4) emittiert wird;
- Aufzeichnen einer Intensitätsminimumsposition des zentralen Intensitätsminimums (39) für die Anregung von jedem einzelnen Photon der Mehrzahl von registrierten einzelnen Photonen;
- und als Reaktion auf jedes einzelne Photon der Mehrzahl von registrierten einzelnen Photonen:

   - Aktualisieren der geschätzten Position (34), um die herum sich die Bahn erstreckt, basierend auf der aufgezeichneten Intensitätsminimumsposition und
   - Reduzieren der Ausdehnungen der Bahn (31) um die geschätzte Position (34) und/oder Erhöhen der Fluoreszenzbeeinflussungs-Effektivität des Fluoreszenzbeeinflussungslichts,

   **dadurch gekennzeichnet, dass** die Fluoreszenzbeeinflussungs-Effektivität des Fluoreszenzbeeinflussungslichts durch Ändern einer zeitlichen Abfolge von Pulsen des Fluoreszenzbeeinflussungslichts und von Pulsen des Fluoreszenzanregungslichts (4) erhöht wird.

2. Verfahren nach Anspruch 1, **dadurch gekennzeichnet, dass** Intensitäten des Fluoreszenzbeeinflussungslichts und des Fluoreszenzanregungslichts (4) konstant gehalten werden.

3. Verfahren nach Anspruch 1 oder 2, **dadurch gekennzeichnet, dass** das Fluoreszenzbeeinflussungslicht Fluoreszenzunterdrückungslicht (5), insbesondere STED-Licht ist, wobei die Fluoreszenzbeeinflussungslichtpulse nicht länger als eine Fluoreszenzlebensdauer des Fluorophor-Moleküls, jedoch länger als die Anregungslichtpulse sind.

4. Verfahren nach Anspruch 3, **dadurch gekennzeichnet, dass** das Registrieren der Photonen des Fluoreszenzlichts (40) gegated wird, um nach dem jeweiligen Fluoreszenzbeeinflussungslichtpuls emittierte Photonen zu selektieren und um Photonen von dem Fluorophor-Molekül, die nicht dem jeweiligen vollständigen Fluoreszenzbeeinflussungslichtpuls ausgesetzt waren, zu blocken.

5. Verfahren nach einem der Ansprüche 1 bis 4, **dadurch gekennzeichnet, dass** sich die Bahn (31) in allen drei Raumdimensionen um die geschätzte Position (34) des vereinzelten Fluorophor-Moleküls herum erstreckt.

6. Verfahren nach einem der vorhergehenden Ansprüche, **dadurch gekennzeichnet, dass** die geschätzte Position, um die herum sich die Bahn erstreckt, basierend auf der aufgezeichneten Intensitätsminimumsposition aktualisiert wird,

- indem die geschätzte Position (34) von der aufgezeichneten Intensitätsminimumsposition weg verschoben wird, wenn das Fluoreszenzbeeinflussungslicht identisch mit dem Fluoreszenzanregungslicht (4) ist, oder
- indem die geschätzte Position (34) zu der aufgezeichneten Intensitätsminimumsposition hin verschoben wird, wenn das Fluoreszenzunterdrückungslicht (5) zusätzlich zu dem Fluoreszenzanregungslicht (4) bereitgestellt wird,

und zwar um einen vorgegebenen Abstandsbruchteil eines Abstands zwischen der geschätzten Position (34) und der aufgezeichneten Intensitätsminimumsposition, wobei der Abstandsbruchteil in einem Bereich von 3 % bis 33 % und vorzugsweise von 10 % bis 20 % liegt.

7. Verfahren nach einem der vorhergehenden Ansprüche, **dadurch gekennzeichnet, dass** die Ausdehnungen der Bahn (31) um die geschätzte Position (34) um einen Ausdehnungsbruchteil reduziert werden, der in einem Bereich von 1 % bis 10 % und vorzugsweise von 2 % bis 5 % liegt, wobei die Fluoreszenzbeeinflussungs-Effektivität des Fluoreszenzbeeinflussungslichts derart erhöht wird, dass Ausdehnungen einer effektiven Anregungs-Punktspreizfunktion der Lichtintensitätsverteilung entsprechend reduziert werden, vorzugsweise ebenfalls um den Ausdehnungsbruchteil.

8. Verfahren nach einem der vorhergehenden Ansprüche, **dadurch gekennzeichnet, dass** die Ausdehnungen der Bahn (31) um die geschätzte Position (34) reduziert werden, sofern nicht vorbestimmte minimale Ausdehnungen erreicht worden sind, und/oder dass die Fluoreszenzbeeinflussungs-Effektivität des Fluoreszenzbeeinflussungslichts erhöht wird, sofern nicht eine vorbestimmte maximale Fluoreszenzbeeinflussungs-Effektivität erreicht worden ist.

9. Verfahren nach einem der vorhergehenden Ansprüche, **dadurch gekennzeichnet, dass** trotz der aktualisierten geschätzten Position (34) und der reduzierten Ausdehnungen der Bahn (31) und/oder der erhöhten Fluoreszenzbeeinflussungs-Effektivität des Fluoreszenzbeeinflussungslichts die Bewegung des zentralen Intensitätsminimums (39) entlang der Bahn (31) über die registrierten einzelnen Photonen hinweg fortgesetzt wird.

10. Verfahren nach einem der vorhergehenden Ansprüche, **dadurch gekennzeichnet,**

- **dass** eine Wiederholungsrate, mit der sich die Bahn (31) um die geschätzte Position (34) des vereinzelten Fluorophor-Moleküls erstreckt, mindestens 50 % und vorzugsweise mindestens 100 % einer Photonenzählrate beträgt, mit der die einzelnen Photonen registriert werden, und/oder
- **dass** ein Signal, das die registrierten einzelnen Photonen anzeigt, mit einer Abtastrate abgetastet wird, die mindestens dem 10-fachen, vorzugsweise mindestens dem 100-fachen einer (bzw. der) Wiederholrate entspricht, mit der sich die Bahn (31) um die geschätzte Position (34) des vereinzelten Fluorophor-Moleküls erstreckt.

11. Verfahren nach einem der vorhergehenden Ansprüche, **dadurch gekennzeichnet, dass** sich die Bahn (31) in allen drei Raumdimensionen um die geschätzte Position (34) des vereinzelten Fluorophor-Moleküls erstreckt, wobei die Ausdehnungen der Bahn (31) um die geschätzte Position (34) in den drei Raumdimensionen vorzugsweise Ausdehnungen einer (oder der) effektiven Anregungs-Punktspreizfunktion (41) der Lichtintensitätsverteilung (38) in den drei Raumdimensionen widerspiegeln.

12. Verfahren nach Anspruch 11, **dadurch gekennzeichnet, dass** die Bahn (31) zwischen den Reaktionen auf zwei aufeinanderfolgende einzelne Photonen der Mehrzahl einzelner Photonen

- auf einer Oberfläche eines Ellipsoids verläuft, das eine x-Halbachse und eine y-Halbachse in einer Fokusebene aufweist, in die der Lichtstrahl fokussiert wird, und eine z-Halbachse in einer z-Richtung, entlang der der Lichtstrahl (3) in die Fokusebene fokussiert wird, wobei die Bahn (31) vorzugsweise mit einer xy-Umlauffrequenz um die z-Richtung rotiert, die nicht höher ist als eine z-Umlauffrequenz ist, mit der die Bahn (31) um eine Achse rotiert, die in der Brennebene mit der z-Umlauffrequenz rotiert, oder
- entlang einer Lissajous-Kurve verläuft, wobei die Lissajous-Kurve vorzugsweise durch die geschätzte Position (34) verläuft.

**13.** Verfahren nach einem der vorhergehenden Ansprüche, **dadurch gekennzeichnet, dass** die Bahn (31), ohne jede Reaktion auf ein registriertes Photon, eine geschlossene Schleife ist.

**14.** Verfahren nach einem der vorhergehenden Ansprüche, **gekennzeichnet durch,** vor dem Formen und Fokussieren des Lichtstrahls (3), um die Lichtintensitätsverteilung mit dem zentralen Intensitätsminimum des Fluoreszenzbeeinflussungslichts zu erzeugen,

- Fokussieren eines Strahls des Fluoreszenzanregungslichts, um ausschließlich anregende Lichtintensitätsverteilung mit einem zentralen Intensitätsmaximum zu erzeugen,
- kontinuierliches Verschieben der ausschließlich anregenden Lichtintensitätsverteilung relativ zu dem Objekt;
- individuelles Registrieren einer vorläufigen Mehrzahl einzelner Photonen von Fluoreszenzlicht, das durch das vereinzelte Fluorophor-Molekül aufgrund der Anregung durch das Fluoreszenzanregungslicht emittiert wird, mit einem Lichtdetektorarray, das eine Verteilung räumlich auflöst, in welche das aus dem zentralen Intensitätsmaximum emittierte Fluoreszenzlicht auf das Lichtdetektorarray abgebildet wird;
- Aufzeichnen einer Detektorarray-Registrierungsposition und einer Intensitätsmaximumsposition des zentralen Intensitätsmaximums für die Anregung jedes einzelnen Photons der vorläufigen Mehrzahl registrierter einzelner Photonen;
und
- Bestimmen eines Anfangswerts der geschätzten Position (34) aus den für die vorläufige Mehrzahl registrierter einzelner Photonen aufgezeichneten Detektorarray-Registrierungspositionen und Intensitätsmaximumspositionen.

**15.** Verfahren nach einem der vorhergehenden Ansprüche, **dadurch gekennzeichnet, dass**, sobald die Molekülposition des vereinzelten Fluorophor-Moleküls bestimmt worden ist, ein anderes Fluorophor-Molekül vereinzelt wird und eine weitere Molekülposition des anderen vereinzelten Fluorophor-Moleküls in dem Objekt bestimmt wird.


## Revendications

**1.** Procédé de détermination d'une position de molécule d'une molécule de fluorophore singularisée dans un objet (11), le procédé comprenant :

- la fourniture d'un faisceau lumineux (3) incluant une lumière d'excitation de fluorescence (4) et une lumière influençant la fluorescence, dans lequel la lumière influençant la fluorescence est identique à la lumière d'excitation de fluorescence (4) ou dans lequel la lumière influençant la fluorescence est une lumière d'inhibition de fluorescence (5) fournie en plus de la lumière d'excitation de fluorescence (4) ;
- la mise en forme et la focalisation du faisceau lumineux (3) de sorte à former une distribution d'intensité lumineuse (38) ayant un minimum d'intensité centrale (39) de la lumière influençant la fluorescence ;
- le décalage en continu de la distribution d'intensité lumineuse (38) par rapport à l'objet (11) de sorte que le minimum d'intensité centrale (39) est déplacé en continu le long d'une piste (31) s'étendant de façon répétée autour d'une position estimée (34) de la molécule de fluorophore singularisée ;
- l'accroissement d'une efficacité influençant la fluorescence de la lumière influençant la fluorescence ;
- le marquage individuel d'une pluralité de photons individuels de la lumière de fluorescence (40) émise par la molécule de fluorophore singularisée en raison de l'excitation par la lumière d'excitation de fluorescence (4) ; et
- l'enregistrement d'une position de minimum d'intensité du minimum d'intensité centrale (39) pour l'excitation de chaque photon individuel de la pluralité de photons individuels marqués ;
- et, en réponse à chaque photon individuel de la pluralité de photons individuels marqués,

- la mise à jour de la position estimée (34) autour de laquelle la piste s'étend sur la base de la position de minimum d'intensité enregistrée, et
- la réduction d'extensions de la piste (31) autour de la position estimée (34) et/ou l'augmentation de l'efficacité influençant la fluorescence de la lumière influençant la fluorescence,

**caractérisé en ce que** l'efficacité influençant la fluorescence de la lumière influençant la fluorescence est accrue en modifiant une succession temporelle d'impulsions de la lumière influençant la fluorescence et d'impulsions de la lumière d'excitation de fluorescence (4).

**2.** Procédé selon la revendication 1, **caractérisé en ce que** les intensités de la lumière influençant la fluorescence et de la lumière d'excitation de fluorescence (4) sont maintenues constantes.

3. Procédé selon la revendication 1 ou 2, **caractérisé en ce que** la lumière influençant la fluorescence est une lumière d'inhibition de fluorescence (5), en particulier une lumière STED, dans lequel les impulsions de la lumière influençant la fluorescence ne sont pas plus longues qu'une durée de vie de fluorescence de la molécule de fluorophore mais sont plus longues que les impulsions de lumière d'excitation.

4. Procédé selon la revendication 3, **caractérisé en ce que** le marquage des photons de la lumière de fluorescence (40) est synchronisé pour sélectionner les photons émis après l'impulsion de la lumière influençant la fluorescence respective et pour bloquer les photons provenant de la molécule de fluorophore qui n'a pas encore été exposée à l'impulsion de la lumière influençant la fluorescence complète respective.

5. Procédé selon l'une quelconque des revendications 1 à 4, **caractérisé en ce que** la piste (31) s'étend autour de la position estimée (34) de la molécule de fluorophore singularisée dans les trois dimensions spatiales.

6. Procédé selon l'une quelconque des revendications précédentes, **caractérisé en ce que** la position estimée autour de laquelle la piste s'étend est mise à jour sur la base de la position minimum d'intensité enregistrée

- **en ce que** la position estimée (34) est décalée par rapport à la position minimum d'intensité enregistrée, si la lumière influençant la fluorescence est identique à la lumière d'excitation de fluorescence (4), ou
- **en ce que** la position estimée (34) est décalée vers la position minimum d'intensité enregistrée, si la lumière d'inhibition de fluorescence (5) est fournie en plus de la lumière d'excitation de fluorescence (4),

d'une fraction de distance prédéterminée d'une distance entre la position estimée (34) et la position minimum d'intensité enregistrée, dans lequel la fraction de distance est dans une plage de 3 % à 33 % et de préférence de 10 % à 20 %.

7. Procédé selon l'une quelconque des revendications précédentes, **caractérisé en ce que** les extensions de la piste (31) autour de la position estimée (34) sont réduites d'une fraction d'extensions qui se trouve dans une plage de 1 % à 10 % et de préférence de 2 % à 5 %, dans lequel l'efficacité d'influence de fluorescence de la lumière influençant la fluorescence est accrue de sorte que les extensions d'une fonction d'étalement de point d'excitation efficace de la distribution d'intensité lumineuse sont réduites en conséquence, de préférence également de la fraction d'extensions.

8. Procédé selon l'une quelconque des revendications précédentes, **caractérisé en ce que** les extensions de la piste (31) autour de la position estimée (34) sont réduites, à moins que les extensions minimales prédéterminées n'aient été atteintes, et/ou l'efficacité d'influence de fluorescence de la lumière influençant la fluorescence est accrue, à moins qu'une efficacité d'influence de fluorescence maximale prédéterminée n'ait été atteinte.

9. Procédé selon l'une quelconque des revendications précédentes, **caractérisé en ce que**, en dépit de la position estimée mise à jour (34) et des extensions réduites de la piste (31) et/ou de l'efficacité d'influence de fluorescence accrue de la lumière influençant la fluorescence, le déplacement du minimum d'intensité centrale (39) le long de la piste (31) se poursuit sur les photons individuels marqués.

10. Procédé selon l'une quelconque des revendications précédentes, **caractérisé en ce que**

- un taux de répétition auquel la piste (31) s'étend autour de la position estimée (34) de la molécule de fluorophore singularisée est d'au moins 50 % et de préférence d'au moins 100 % d'un taux de photons auquel les photons individuels sont marqués, et/ou
- un signal indiquant les photons individuels marqués est échantillonné à un taux d'échantillonnage qui est d'au moins 10 fois, de préférence d'au moins 100 fois un (ou le) taux d'échantillonnage auquel la piste (31) s'étend autour de la position estimée (34) de la molécule de fluorophore singularisée.

11. Procédé selon l'une quelconque des revendications précédentes, **caractérisé en** ce la piste (31) s'étend autour de la position estimée (34) de la molécule de fluorophore singularisée dans les trois dimensions spatiales, dans lequel les extensions de la piste (31) autour de la position estimée (34) dans les trois dimensions spatiales reflètent de préférence les extensions d'une (ou de la) fonction d'étalement de point d'excitation efficace (41) de la distribution d'intensité lumineuse (39) dans les trois dimensions spatiales.

**12.** Procédé selon la revendication 11, **caractérisé en ce que**, entre les réponses aux deux photons individuels consécutifs de la pluralité de photons individuels, la piste (31) s'étend

- sur une surface d'un ellipsoïde ayant un demi-axe x et un demi-axe y dans un plan focal dans lequel le faisceau lumineux est focalisé et un demi-axe z dans une direction z le long de laquelle le faisceau lumineux (3) est focalisé dans le plan focal, dans lequel la piste (31) tourne de préférence autour de la direction z à une fréquence de révolution qui ne dépasse pas une fréquence de révolution z à laquelle la piste (31) tourne autour d'un axe tournant dans le plan focal à la fréquence de révolution z, ou
- le long d'une courbe de Lissajous, dans lequel la courbe de Lissajous passe de préférence par la position estimée (34).

**13.** Procédé selon l'une quelconque des revendications précédentes, **caractérisé en ce que**, sans une quelconque réponse à un quelconque photon marqué, la piste (31) est une boucle fermée.

**14.** Procédé selon l'une quelconque des revendications précédentes, **caractérisé par**, avant la mise en forme et la focalisation du faisceau lumineux (3) de sorte à former la distribution d'intensité lumineuse ayant le minimum d'intensité centrale de la lumière influençant la fluorescence,

- la focalisation d'un faisceau de la lumière d'excitation de fluorescence de sorte à former une distribution d'intensité lumineuse d'excitation seule ayant un maximum d'intensité centrale ;
- le décalage en continu de la distribution d'intensité lumineuse d'excitation seule par rapport à l'objet ;
- le marquage individuel d'une pluralité préliminaire de photons individuels de lumière de fluorescence émise par la molécule de fluorophore singularisée en raison de l'excitation par la lumière d'excitation de fluorescence avec un réseau de détecteurs de lumière résolvant spatialement une distribution dans laquelle la lumière de fluorescence émise en dehors du maximum d'intensité maximum est imagée sur le réseau de détecteurs de lumière ;
- l'enregistrement d'une position de marquage de réseau de détecteurs et d'une position de maximum d'intensité du maximum d'intensité central pour l'excitation de chaque photon individuel de la pluralité préliminaire de photons individuels marqués ; et
- la détermination de la position estimée (34) de départ à partir des positions de marquage du réseau de détecteurs et des positions de maximum d'intensité enregistrées pour la pluralité préliminaire de photons individuels marqués.

**15.** Procédé selon l'une quelconque des revendications précédentes, **caractérisé en ce qu'**une fois que la position de molécule de la molécule de fluorophore singularisée a été déterminée, une autre molécule de fluorophore est singularisée et une autre position de molécule de l'autre molécule de fluorophore singularisée dans l'objet est déterminée.

Fig. 1

Fig. 2

EP 4 377 678 B1

Fig. 3

Fig. 4A          Fig. 4B

**Fig. 5**

**Fig. 6**

**Fig. 7**

a  $\omega_{xy} = 2\omega_z$

**Fig. 8**

b  $3\omega_{xy} = 5\omega_z$

**Fig. 9**

c  $7\omega_{xy} = 10\omega_z$

**Fig. 10**

a  $2\omega_x = 3\omega_y = 4\omega_z$

**Fig. 11**

b  $3\omega_x = 4\omega_y = 5\omega_z$

**Fig. 12**

EP 4 377 678 B1

**Fig. 13**

**Fig. 14A**

**Fig. 14B**

**Fig. 14C**

**42** — Singularizing fluorophore molecule

**43** — Searching for singularized fluorophore molecule

**44** — Determining estimated position 34 from detector array registration positions and light intensity distribution positions recorded for individual photons registered

**45** — Shaping and focusing light beam 3 including fluorescence excitation light 4 to have central intensity minimum 39 of fluorescence influencing light

**46** — Continuously moving central intensity minimum 39 along track 31 repeatedly extending around estimated position 34

**47** — Registering individual photons and recording an intensity minimum position for the excitation of each photon registered

**48** — Updating estimated position 34 on basis of each recorded intensity minimum position, reducing extensions of track 31, increasing fluorescence influencing effectiveness

**50** — **49** — No — Molecule position determined? — Yes — **51**

Fig. 15

**EP 4 377 678 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10900901 B2
- WO 2020064108 A1

- DE 102018127891 B3

### Non-patent literature cited in the description

- **WEBER MICHAEL et al.** MINSTED fluorescence localization and nanoscopy. *Nat. Phot.*, 2021, https://doi.org/10.1038/s41566-021-00774-2
- Measuring nanoscale diffusion dynamics in cellular membranes with super-resolution STED-FCS. **SEZGIN ERDINC et al.** NATURE PROTOCOLS. NATURE PUBLISHING GROUP, 06 March 2019, vol. 14, 1054-1083

- **M. WEBER et al.** MINSTED fluorescence localization and nanoscopy. *Nat. Phot.*, 2021, https://doi.org/10.1038/s41566-021-00774-2